Europäisches Patentamt

European Patent Office

Office européen des brevets

(19)

(11) **EP 0 887 619 B1**

## (12) FASCICULE DE BREVET EUROPEEN

(45) Date de publication et mention
de la délivrance du brevet:
**19.01.2005 Bulletin 2005/03**

(51) Int Cl.$^7$: **G01B 11/16**, G01D 5/353

(21) Numéro de dépôt: **98401578.4**

(22) Date de dépôt: **25.06.1998**

(54) **Système d'alimentation et de transmission pour capteur à fibre optique, intégré dans une structure amagnétique, et module d'alimentation et de réception associé**

Versorgungs- und Übertragungssystem für einen in einer amagnetischen Struktur integrierten optischen Fasersensor sowie zugehöriger Versorgungs- und Empfangsmodul

Feeding and transmission system for optical fibre sensor, integrated in an amagnetic structure, and associated feeding and reception module

(84) Etats contractants désignés:
**DE FR GB IT**

(30) Priorité: **26.06.1997 FR 9708024**

(43) Date de publication de la demande:
**30.12.1998 Bulletin 1998/53**

(73) Titulaire: **COMMISSARIAT A L'ENERGIE ATOMIQUE**
**75015 Paris (FR)**

(72) Inventeurs:
- **Bugaud, Michel**
  **92500 Rueil (FR)**
- **de Dieuleveult, François**
  **91940 Les Ulis (FR)**
- **Lecompte, Jean-Claude**
  **75015 Paris (FR)**
- **Magne, Sylvain**
  **92320 Chatillion (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 338 079        WO-A-96/31756**
**US-A- 5 493 390**

- **W.B. SPILLMAN: "Sensing and Processing for Smart Structures" PROCEEDINGS OF THE IEEE, vol. 84, no. 1, janvier 1996, pages 68-77, XP000551334 NEW YORK, US**
- **A.B. LOBO RIBEIRO ET AL: "Time-and-spatial-multiplexing tree topology fir fiber-optic Bragg-grating sensors with interferometric wavelength-shift detection." APPLIED OPTICS, vol. 35, no. 13, 1 mai 1996, pages 2267-2273, XP000589776 NEW YORK, US**

**Description**

**DOMAINE TECHNIQUE**

La présente invention concerne un système d'alimentation et de transmission associé à un capteur ou à une pluralité de capteurs reliés à une fibre optique.

On connaît déjà des réseaux de capteurs à fibres optiques comprenant notamment des réseaux de capteurs de déformation à fibres optiques.

Bien souvent des réseaux de Bragg photo-inscrits constituent les composants transducteurs de déformation.

L'une des premières architectures de réseau à avoir été publiée utilise une source optique d'une largeur spectrale plus grande que la bande spectrale contenant les spectres des réseaux de Bragg et analyse séquentiellement les longueurs d'onde réfléchies par les différents capteurs (démultiplexage en longueur d'onde puis analyse spectrale des différents signaux).

. A ce sujet, on se reportera aux documents (1), (2) et (3) qui, comme les autres documents cités par la suite, sont mentionnés à la fin de la présente description.

La présente invention s'applique particulièrement à la surveillance de structures soit dans le domaine du bâtiment et des travaux publics, soit dans le domaine des transports et de l'aéronautique, pour obtenir des structures « intelligentes », le plus souvent à base de matériaux composites.

Un matériau composite est constitué de fibres noyées dans une matrice de résine.

Le plus souvent, ces fibres sont constituées de carbone ou de verre.

La matrice conserve la disposition géométrique des fibres et leur transmet les sollicitations mécaniques auxquelles est soumise une pièce faite du matériau composite.

L'utilisation de matériaux composites présente de nombreux avantages.

Parmi toutes les industries susceptibles d'exploiter ces matériaux, l'industrie aéronautique est incontestablement celle qui profite le plus de leur potentiel.

Outre le gain de masse réalisé sur les éléments en matériau composite (de l'ordre de 20% par rapport à une solution classique utilisant des alliages légers), ces matériaux composites témoignent d'une résistance bien supérieure à la fatigue et à la corrosion.

De plus, ils permettent la réalisation de formes complexes qui sont difficiles à obtenir à un coût raisonnable avec un métal.

L'autre avantage déterminant des matériaux composites réside dans la possibilité d'y inclure des capteurs et notamment des capteurs à fibres optiques tels que les capteurs mentionnés plus haut, les fibres optiques s'insérant au sein des plis des fibres que comprennent les matériaux composites (typiquement des fibres de carbone).

Les deux types de matériaux composites qui sont actuellement les plus utilisés sont les composés Kevlar (marque déposée)/époxyde et carbone/époxyde.

Le Kevlar (marque déposée), constitué d'une fibre aramide, est préféré pour toutes les applications où l'on recherche la résistance maximale et un bon amortissement aux vibrations tandis que le carbone est préféré pour les applications où l'on recherche la rigidité maximale.

Il est à noter que le Kevlar (marque déposée) est électriquement isolant tandis que le carbone est électriquement conducteur.

Les structures ainsi munies de réseaux de capteurs à fibres optiques permettent d'obtenir une cartographie des contraintes auxquelles elles sont soumises, de leurs éventuelles dislocations ainsi que de leur température.

Ces structures sont appelées « structures intelligentes » car elles permettent le suivi de leur état de fonctionnement et éventuellement l'obtention d'informations nécessaires à leur contrôle soit pour supprimer leurs vibrations soit pour contrôler leurs déformations.

Les structures en matériaux composites sont généralement assez minces (de l'ordre de 3 mm ou moins) et de plus leurs contours sont usinés après polymérisation.

De ce fait, la technologie des capteurs à fibres optiques est soumise aux deux importantes limitations suivantes.

1) Il n'est pas possible de faire émerger une fibre optique hors d'un pli car le matériau subirait un délaminage et une fragilisation.

Une fibre optique noyée dans un matériau composite en nappe sort donc par la tranche de celui-ci.

2) La soudure monomode ou le montage d'un connecteur optique sur une fibre optique monomode émergeant d'un contour après usinage présente des difficultés encore non résolues pour deux raisons.

La première raison tient à ce que cette technique de connexion est très précise et n'est pas adaptée à un tel processus industriel.

La deuxième raison tient à la difficulté d'extraire une extrémité libre de la fibre optique que ce soit pour y effectuer une soudure ou y monter un connecteur optique.

Si la démonstration de la faisabilité des réseaux de capteurs à fibres optiques est concluante du point de vue de la mesure en laboratoire, les deux limitations ci-dessus empêchent la réalisation en série de ce type de structure dans l'industrie.

Un problème se pose donc en ce qui concerne l'alimentation électrique d'un réseau de capteurs à fibres optiques et la transmission des informations fournies par ces capteurs sans utiliser des moyens de connexions optiques.

## ÉTAT DE LA TECHNIQUE ANTÉRIEURE

Plusieurs méthodes permettent d'effectuer un échange d'énergie à distance, sans contact, parmi lesquelles figurent (a) les transmissions optiques et radiofréquences et (b) l'induction électromagnétique.

Dans le premier cas (a), on utilise un rayonnement électromagnétique à fréquence optique ou radiofréquence.

Dans le deuxième cas (b), on utilise simplement une induction électromagnétique quasistatique.

Le rayonnement optique peut être caractérisé par une forte directivité spatiale mais une faible pénétration dans les matériaux d'usage courant.

Le rayonnement herztien se caractérise quant à lui par une plus faible directivité mais une meilleure pénétration des matériaux opaques aux rayonnements optiques.

La plupart des matériaux composites intéressants pour l'aéronautique, en particulier le carbone-époxy, étant opaques aux rayonnements optiques des domaines visible et proche infrarouge, la transmission d'énergie par voie optique n'est pas une bonne solution pour ces matériaux composites.

En revanche, la transmission d'énergie et d'informations par voie radiofréquence ou inductive à déjà été utilisée avec succès dans le domaine biomédical pour l'alimentation de contrôleurs cardiaques ou la surveillance à distance in-vivo d'animaux.

A ce sujet, on consultera les documents (4), (5) et (6).

En ce qui concerne la transmission sans contact par un rayonnement radiofréquence, on connaît déjà différents systèmes d'identification sans contact.

Un système d'identification sans contact (identification à distance) est constitué d'un émetteur et d'un ou de plusieurs émetteurs-récepteurs appelés transpondeurs.

Un transpondeur est destiné à être implanté sur des objets soit pour y effectuer des mesures soit pour y servir d'identificateur.

Un transpondeur émet une information (mesure en cours ou code d'identification) aussitôt qu'il a acquis suffisamment d'énergie pour ce faire.

Cette énergie est le plus souvent fournie soit par une onde radiofréquence soit par induction électromagnétique.

A ce sujet, on pourra consulter le document (7) qui décrit un système constitué d'une antenne insérée dans un circuit résonant, d'un circuit électronique de réception contenant deux circuits à seuil différents et d'un circuit électronique de conversion, de stockage et d'émission.

. Ce système à deux seuils permet d'assurer le transfert des données uniquement si l'énergie d'alimentation est suffisante.

On connaît également par le document (9) un transpondeur qui exploite un dispositif de commutation de l'alimentation d'une antenne d'excitation radiofréquence afin d'augmenter les caractéristiques d'émission à puissance électrique constante.

Le document (8) décrit aussi un transpondeur et la station d'interrogation de celui-ci qui fonctionne en modulation de fréquence.

La modulation de fréquence est intéressante car elle permet de transférer un fort débit d'informations.

En revanche, elle nécessite un circuit résonant de largeur spectrale suffisamment importante au vu de l'excursion de fréquence de modulation et donc un coefficient de qualité de l'oscillateur plus faible agissant à l'encontre d'une forte transmission de puissance.

Il s'agit là d'un problème commun à la plupart des transpondeurs.

On connaît aussi par le document (10) un transpondeur qui n'exploite qu'une seule bobine pour l'alimentation radiofréquence et pour l'émission de données.

Il se présente sous une forme intégrée, un circuit résonant étant photogravé directement sur un substrat en silicium.

La modulation des données et l'alimentation se font avec un même signal en modulation de fréquence.

On prélève le signal sur une partie d'un bobinage servant à l'alimentation.

Considérons maintenant la transmission radiofréquence à travers un matériau composite conducteur.

En ce qui concerne un tel matériau et en particulier un matériau composite de type carbone/époxy, la profondeur d'atténuation $\delta$ d'une onde radiofréquence dépend de la fréquence de cette onde de la façon suivante :

$$\delta = 1/(2.\pi. (10^{-7}.\sigma.f)^{0,5})$$

Dans cette formule f représente la fréquence de l'onde radiofréquence et $\sigma$ est la conductivité électrique du matériau.

Pour des fréquences de l'ordre de quelques gigahertz et pour des plaques de composite carbone/époxy, la profondeur d'atténuation expérimentale est de l'ordre de quelques dixièmes de millimètres.

Une atténuation de l'ordre de 30 dB est obtenue au travers d'une telle plaque de deux millimètres d'épaisseur pour une fréquence d'excitation de 1 GHz (pour une conductivité de 750 $(\Omega.m)^{-1}$).

Dans le cas d'une transmission radiofréquence d'informations à travers de tels matériaux composites, les fréquences porteuses sont de préférence choisies dans le domaine du gigahertz pour diverses raisons.

D'une part il faut faire un compromis entre l'atténuation par le matériau et la puissance rayonnée déduite de la contrainte de dimensionnement de l'antenne (antenne de taille réduite).

D'autre part le débit d'information peut être plus important aux fréquences de l'ordre du gigahertz et des modules d'émission dans ce domaine existent dans le commerce.

La limite de détection usuelle des modules de réception radiofréquence est typiquement de l'ordre de -95 dBm à -100 dBm ce qui correspond à une tension de quelques microvolts.

Considérons une puissance d'antenne d'émission de 0 dBm (1 mW).

L'antenne peut ainsi avoir une constitution simple et ne pas être adaptée (perte de 10 dBm à 20 dBm environ) si l'épaisseur de matériau composite à l'interface est inférieure à 4 mm environ (60 dB d'atténuation) ce qui est en pratique toujours le cas.

Considérons maintenant une transmission sans contact par induction électromagnétique.

L'induction électromagnétique peut servir soit à alimenter à distance un dispositif électronique soit à transmettre une information.

Dans le document (11) est décrit un couplage par induction électromagnétique permettant la transmission d'un signal sans contact électrique afin de s'affranchir des problèmes de pollution des interfaces électriques (lorsqu'on veut faire des mesures physiques dans un environnement salissant).

On connaît également par les documents (12) et (13) des systèmes transpondeurs.

Le système décrit dans le document (12) utilise une modulation d'amplitude par couplage inductif.

Le dispositif décrit dans le document (13) comprend une bobine primaire d'induction de fort diamètre et deux bobines secondaires identiques de petit diamètre dont les bobinages sont reliés en opposition.

On connaît également par les documents (14) et (15) un dispositif comprenant une jauge de contrainte électrique (munie d'une résistance) qui est incluse dans un circuit résonant de type RLC (résistance, inductance, capacité).

Ce circuit est alimenté par induction électromagnétique, l'inductance servant de bobine secondaire tandis qu'une bobine primaire est collée à l'extérieur d'un matériau composite dont est rendue solidaire la bobine secondaire.

Un tel dispositif assure simultanément l'alimentation du circuit et la transmission des données en mesurant la tension recueillie aux bornes de la bobine primaire par simple inductance mutuelle.

Etant donné que la jauge de contrainte résistive est insérée dans un circuit résonant du type RLC il existe une zone de fonctionnement plus favorable en fréquence qui correspond à la relation d'accord de Thomson.

Une application du dispositif décrit dans ces deux documents (14) et (15) est la transmission inductive à travers des matériaux composites de type Plexiglass (marque déposée), fibre de verre, Kevlar (marque déposée) mais surtout à travers des matériaux composites en carbone/époxy.

## EXPOSÉ DE L'INVENTION

La présente invention résout le problème de la conception d'un système d'alimentation sans contact pour capteur(s) à fibre optique, intégré dans une structure en matériau amagnétique (par exemple composite) et de transmission sans contact des données recueillies grâce à ce ou ces capteurs en utilisant d'une part l'induction électromagnétique et d'autre part la transmission radiofréquence.

De façon précise, la présente invention a pour objet un système d'alimentation et de transmission pour capteur à fibre optique, intégré dans une structure en matériau amagnétique, la fibre optique étant reliée à au moins un capteur apte à modifier une lumière se propageant dans cette fibre optique, sous l'effet d'une modification d'un paramètre de la structure, ce système étant caractérisé en ce qu'il comprend :

- un circuit optique comprenant une source de lumière, qui est prévue pour envoyer ladite lumière dans la fibre optique, et des moyens opto-électriques prévus pour détecter la lumière modifiée par le capteur et fournir des signaux électriques permettant de déterminer la modification du paramètre de la structure, et
- un circuit électronique comprenant des moyens d'émission radio-fréquence de ces signaux électriques et des moyens d'alimentation qui reçoivent de l'énergie électromagnétique par induction et sont prévus pour l'alimentation électrique de la source de lumière et des moyens d'émission radio-fréquence,

et en ce que chaque capteur est un transducteur à réseau de Bragg.

L'invention utilise ainsi deux techniques permettant chacune d'optimiser une partie de la fonction de contrôle à savoir la technique d'alimentation par induction électromagnétique permettant de transmettre l'énergie et la technique de transmission radiofréquence permettant de transmettre des informations codées à haute fréquence et donc à haut débit.

L'invention présente des avantages.

1° Elle permet une alimentation par induction électromagnétique à travers un matériau amagnétique optiquement opaque et électriquement conducteur comme par exemple un matériau composite de type carbone/époxy.

2° On peut incorporer dans un support tous les composants d'optique et d'électronique du système, intégrés entre deux nappes (à une température de l'ordre de 180°C et à une pression de $7 \times 10^5$ Pa dans le cas d'un matériau composite en carbone/époxy).

3° On peut définir un composant d'optique intégrée planaire spécifique assurant la fonction de multiplexeur et de filtre de mesure.

Dans la présente invention, chaque transducteur à réseau de Bragg est de préférence photo-inscrit sur la fibre optique mais pourrait être formé de toute autre façon sur la fibre par exemple par gravure mécanique ou chimique.

Chaque capteur est de préférence apte à fournir, à partir de ladite lumière, une raie spectrale susceptible de fluctuer dans un domaine spectral déterminé en vue de mesurer la longueur d'onde de cette raie.

La fibre optique peut être munie d'une pluralité de capteurs placés en série sur cette fibre optique, les moyens opto-électriques comprenant un dispositif de démultiplexage ayant une entrée destinée à recevoir les raies spectrales correspondant aux capteurs et des sorties destinées à fournir respectivement les raies spectrales démultiplexées de façon à pouvoir mesurer les longueurs d'onde respectives de ces raies.

De préférence, le dispositif de démultiplexage comprend :

- un séparateur en énergie, ayant une entrée, qui est destinée à recevoir le spectre optique formé par l'ensemble des raies spectrales, et une pluralité de sorties qui sont aptes à fournir respectivement des fractions de l'énergie lumineuse du spectre optique, et
- une pluralité de réflecteurs de Bragg sélectifs en longueur d'onde qui sont respectivement reliés aux sorties, chaque réflecteur de lumière sélectif en longueur d'onde ayant une bande passante en longueur d'onde qui contient le domaine spectral associé à l'une des raies et réfléchissant donc seulement cette raie, chaque réflecteur sélectif étant relié à un guide d'onde optique destiné à propager la raie réfléchie par ce réflecteur.

On peut utiliser un séparateur en énergie de type connu par exemple du genre de ceux qui sont commercialisés par la société Corning. Ce séparateur en énergie peut être un ensemble de jonctions séparatrices montées en cascade, c'est-à-dire en arbre (leur montage est arborescent).

Les réflecteurs sélectifs peuvent comprendre des réseaux de Bragg (« Bragg gratings »).

Les moyens opto-électriques comprennent de préférence :

- un dispositif de mesure, par filtrage, de la longueur d'onde de chaque raie spectrale, ce dispositif de mesure comprenant, pour chaque raie, une voie de mesure munie d'un filtre et une voie de référence, et
- des moyens de photo-détection, pour chaque raie spectrale, des intensités lumineuses respectivement transmises par les voies de mesure et de référence correspondantes, de manière à pouvoir déterminer la longueur d'onde de cette raie en calculant le rapport des intensités ainsi détectées.

Chaque filtre associé à une voie de mesure est de préférence choisi parmi les réseaux de Bragg à période variable et les filtres à multicouches diélectriques.

Le dispositif de démultiplexage et le dispositif de mesure par filtrage peuvent être intégrés sur un même substrat qui est de préférence en verre ou en silicium.

Selon un premier mode de réalisation particulier du système objet de l'invention, les moyens d'émission radiofréquence comprennent des moyens de multiplexage temporel des signaux et des moyens de modulation de fréquence des signaux multiplexés.

Selon un deuxième mode de réalisation particulier, les moyens d'émission radio-fréquence comprennent des moyens de modulation d'amplitude, à porteuses multiples, des signaux.

Le système objet de l'invention peut comprendre en outre un substrat en verre, en silicium ou en polyimide auquel sont fixés le circuit optique et le circuit électronique, l'ensemble formé par ce circuit optique, ce circuit électronique et ce substrat étant noyé dans un matériau céramique ou une résine époxy.

Le paramètre de la structure que l'on veut déterminer peut être une température ou une contrainte.

La présente invention concerne également un module d'alimentation et de réception conçu pour le système objet de l'invention, ce module étant destiné à être mis en contact avec la paroi externe de la structure et comprenant :

- des moyens d'émission d'énergie électromagnétique destinée à être fournie, par induction, aux moyens d'alimentation faisant partie du circuit électronique du système,
- des moyens d'alimentation à haute tension et haute fréquence de ces moyens d'émission d'énergie électromagnétique, et
- des moyens de réception des signaux émis par les moyens d'émission radio-fréquence faisant partie du circuit électronique du système.

Ce module peut être rendu rigidement solidaire de la structure, en vue d'alimenter le système et recevoir les signaux en permanence lors de l'utilisation de la structure, ou être amovible en vue d'alimenter le système et recevoir les signaux seulement lors d'une inspection de la structure.

## BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue en coupe schématique d'un mode de réalisation particulier du système objet de l'invention,
- la figure 2A est une vue schématique d'un système conforme à l'invention, associé à un seul capteur,
- la figure 2B est une vue schématique d'un autre système conforme à l'invention, associé à plusieurs capteurs,
- la figure 3 illustre schématiquement le principe d'une mesure de longueur d'onde utilisable dans l'invention,
- la figure 4 représente les variations de la transmission d'un filtre utilisable pour la mise en oeuvre de l'invention, en fonction de la longueur d'onde,
- les figures 5A et 5B sont des vues de dessus schématiques de moyens de démultiplexage en longueur d'onde utilisables dans l'invention,
- les figures 6A et 6B illustrent schématiquement le principe d'un démultiplexage spectral utilisable avec le système de la figure 2A (pour la figure 6A) et avec le système de la figure 2B (pour la figure 6B),
- la figure 7 est une vue schématique du module associé au système de la figure 1 et du circuit électronique faisant partie de ce système,
- la figure 8 est un schéma électrique d'un circuit de conversion courant-tension de type transimpédance utilisable dans l'invention,
- la figure 9A est une vue schématique d'un mode de réalisation particulier de moyens d'émission radiofréquence utilisables dans un système conforme à l'invention et la figure 9B est une vue schématique de moyens de réception qui leur correspondent dans le module associé à ce système,
- la figure 10A est une vue schématique d'un mode de réalisation particulier de moyens d'émission radiofréquence utilisables dans un autre système conforme à l'invention et la figure 10B est une vue schématique de moyens de réception qui leur correspondent dans le module associé à cet autre système,
- la figure 11A est une vue schématique d'un mode de réalisation particulier de moyens d'émission radiofréquence utilisables dans un autre système conforme à l'invention et la figure 11B est une vue schématique de moyens de réception qui leur correspondent dans le module associé à cet autre système,
- les figures 12A et 12B illustrent schématiquement deux possibilités de démultiplexage, et
- la figure 13 illustre schématiquement un autre mode de réalisation particulier de l'invention.

## EXPOSÉ DÉTAILLÉ DE MODES DE RÉALISATION PARTICULIERS

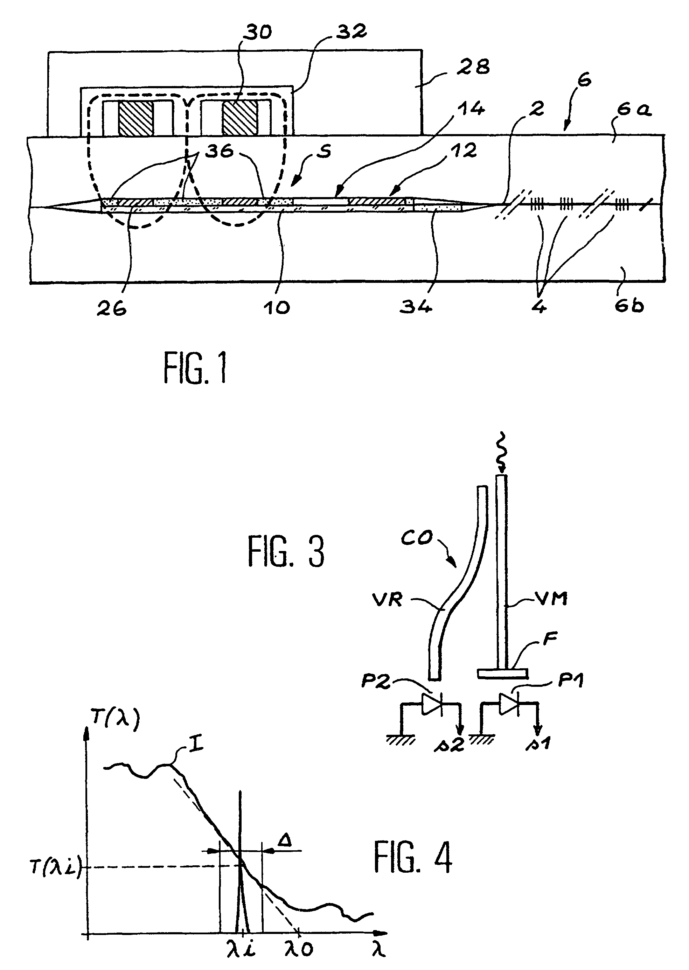

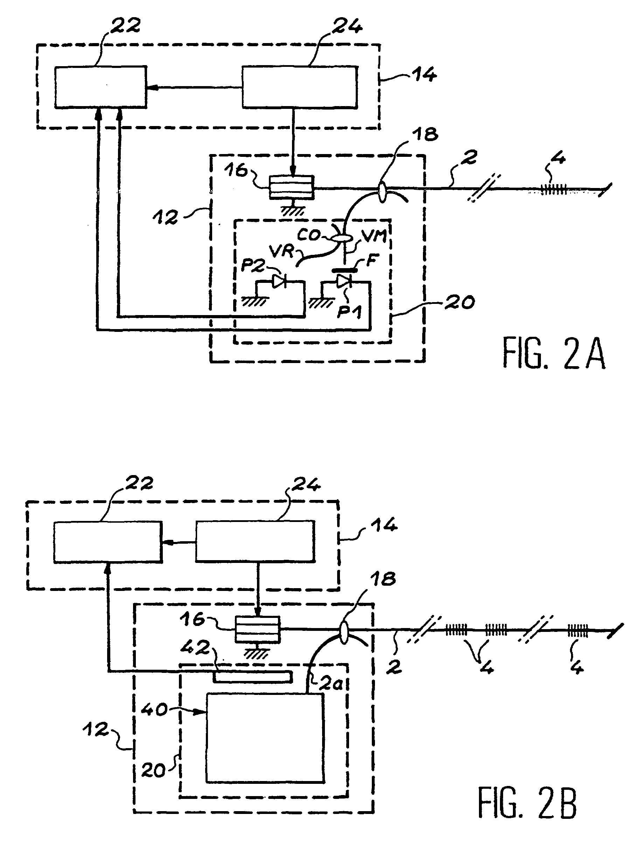

On décrit maintenant un exemple d'un système d'alimentation et de transmission pour capteur(s) à fibre optique conforme à l'invention en faisant référence aux figures 1, 2A et 2B.

Sur ces figures, la fibre optique 2, de préférence monomode, est munie d'un ou de plusieurs capteurs 4 qui, dans l'exemple représenté, sont des transducteurs à réseau de Bragg photo-inscrits sur la fibre 2.

Ce ou ces transducteurs permettent de mesurer des déformations ou des variations de température d'une structure en matériau composite 6 dans laquelle sont intégrés le système S (micro-système sensiblement plan dans l'exemple représenté) et la fibre optique 2 munie d'un, ou d'une pluralité de transducteurs 4.

Dans le cas de la figure 2A, la fibre ne comporte qu'un seul transducteur 4 et le micro-système sensiblement plan S peut alors être formé sur un substrat isolant 10 (figure 1) qui peut être rigide (par exemple en verre ou en silicium) ou au contraire flexible (par exemple en polyimide).

Dans le cas de la figure 2B, la fibre 2 comporte plusieurs transducteurs 4, par exemple huit transducteurs qui sont placés en série sur cette fibre 2.

Dans ce cas, le substrat 10 du micro-système S peut être un substrat "intelligent", par exemple en verre ou en silicium, utilisant les techniques de l'optique intégrée pour la fabrication du micro-système.

Ce micro-système S comprend un circuit optique 12 ainsi qu'un circuit électronique 14.

Le circuit optique 12 comprend :

- une source de lumière 16 formée par une diode superluminescente et
- un coupleur optique équilibré à quatre voies 18 (50% de transmission sur les deux voies de sortie).

Le circuit optique 12 comprend aussi des moyens opto-électriques 20.

La source 16 est connectée à une voie d'entrée du coupleur 18.

L'autre voie d'entrée de ce coupleur 18 est connectée aux moyens opto-électriques 20.

L'une des deux voies de sortie du coupleur 18 est laissée libre et clivée en biais pour annuler les réflexions en bout de fibre.

L'autre voie de sortie de ce coupleur 18 est reliée à l'une des extrémités de la fibre optique 2 sur laquelle chaque réseau de Bragg est photo-inscrit.

L'autre extrémité de la fibre optique 2 est clivée en biais.

La source 16 envoie la lumière qu'elle engendre dans la fibre optique 2 et les moyens opto-électriques 20 détectent la lumière modifiée par chaque transducteur 4 en réponse à des variations de température ou à des déformations de la structure 6 et fournissent des signaux électriques permettant de déterminer ces variations de température ou ces déformations.

Le circuit électronique 14 comprend :

- des moyens 22 d'émission radio-fréquence de ces signaux électriques et
- des moyens 24 d'alimentation électrique de la source de lumière 16 et des moyens d'émission radio-fréquence 22.

Ces moyens d'alimentation 24 reçoivent de l'énergie par induction électromagnétique et comprennent pour ce faire une bobine sensiblement plane 26 (figure 1).

Lorsqu'on utilise le micro-système S, on lui associe un module 28 d'alimentation et de réception appelé module externe (figure 1).

Ce module externe 28 est destiné à être mis en contact avec la paroi externe de la structure 6.

Comme on le verra mieux par la suite, ce module externe 28 comprend :

- des moyens d'émission d'une énergie électromagnétique destinée à être fournie par induction électromagnétique aux moyens 24 d'alimentation faisant partie du circuit électronique 14 du micro-système S,
- des moyens d'alimentation à haute tension et haute fréquence de ces moyens d'émission d'énergie électromagnétique et
- des moyens de réception des signaux émis par les moyens d'émission radio-fréquence 22 du micro-système S.

Comme on le voit sur la figure 1, les moyens d'alimentation à haute tension (100 à 200 Veff) et haute fréquence comprennent une bobine 30 associée à un noyau (« core ») 32 qui a pour fonction de guider les lignes de champ vers la bobine 26 du micro-système.

La bobine 30 constitue une bobine primaire et la bobine 26 constitue une bobine secondaire.

Il est préférable de repérer la position de cette bobine secondaire 26 sur la paroi externe de la structure 6 pour rendre concentriques les bobines 26 et 30.

Le noyau 32 est de préférence en nickel-zinc.

Deux utilisations du module externe 28 sont possibles.

Ce module externe peut être fixé à la paroi externe de la structure 6 pour alimenter le micro-système et recevoir les signaux en permanence lors de l'utilisation de la structure.

On peut au contraire rendre ce module externe amovible pour alimenter le micro-système et recevoir les signaux seulement lors d'une inspection de la structure.

Cette seconde utilisation est préférable car elle n'ajoute à la structure aucun élément supplémentaire susceptible de perturber à la fois la fabrication de cette structure et l'exploitation de celle-ci.

Comme on le voit sur la figure 1, le micro-système sensiblement plan S est intégré entre deux nappes 6a et 6b du matériau composite.

Les dimensions typiques de ce micro-système sont 25 mm x 80 mm x 2 mm.

Dans le cas où l'on utilise plusieurs transducteurs 4, le substrat 10 peut être fixé à un support flexible 34 par exemple en polyimide (figure 1) qui prolonge le substrat 10 et permet de positionner la fibre optique 2 au niveau de la tranche de ce substrat 10.

Le matériau composite peut être le carbone-époxy ou le kevlar (marque déposée)-époxy.

Le procédé de fabrication typique d'un matériau composite de type carbone-époxy en autoclave nécessite une température de 180°C et une pression de l'ordre de $7x10^5$ Pa pendant plusieurs heures.

C'est pourquoi le micro-système S ainsi que son substrat 10 et l'éventuel support 34 sont de préférence noyés dans un élément d'enrobage 36 de type céramique ou époxy.

On utilise par exemple une céramique commercialisée sous la référence COTRONICS 808.

Les dilatations thermiques de cette céramique, du carbone-époxy et du kevlar (marque déposée)-époxy sont respectivement de l'ordre de $2{,}5x10^{-6}/°C$, $0{,}5x10^{-6}/°C$ et $-2x10^{-6}/°C$ (dans le cas de fibres croisées tissées à caractéristiques identiques selon deux dimensions).

Cette céramique subira un léger rétreint lors du refroidissement jusqu'à la température ambiante à la sortie de l'autoclave.

Dans le cas de la figure 2A, le transducteur 4 fournit à partir de la lumière qu'il reçoit de la source 16 une raie spectrale susceptible de fluctuer dans un domaine spectral déterminé.

Les moyens opto-électriques 20 (figure 2A) comprennent un coupleur optique CO ayant deux branches de sortie qui constituent respectivement une voie de mesure VM et une voie de référence VR.

Il s'agit d'un coupleur optique dont le taux de séparation est stable (notamment en température).

La raie spectrale est envoyée à la branche d'entrée de ce coupleur par l'intermédiaire de la voie correspondante du coupleur 18.

La voie de mesure VM comporte un filtre optique F (élément sélectif en longueur d'onde) ayant une réponse connue et une forte transition spectrale.

A ce sujet, on consultera le document (16).

Ce filtre F est suivi par un photodétecteur P1 qui fournit un signal électrique s1 représentatif de la lumière filtrée par ce filtre.

Un autre photodétecteur P2 est placé à la suite de la voie de référence VR et fournit un signal électrique s2 représentatif de la lumière transmise par celle-ci.

Ces signaux s1 et s2 sont envoyés aux moyens d'émission 22 faisant partie du circuit électronique 14.

De la même façon, dans le cas de la figure 2B, à partir de la lumière émise par la source 16 les transducteurs 4 fournissent des raies spectrales qui sont susceptibles de fluctuer respectivement dans des domaines spectraux déterminés.

Dans le cas de cette figure 2B, les moyens opto-électriques 20 comprennent un dispositif de démultiplexage et de filtrage 40 et une barrette de photodiodes 42.

Le dispositif de démultiplexage et de filtrage 40 forme un circuit optique intégré plan dont l'entrée est reliée à la branche correspondante du coupleur 18 pour recevoir les raies spectrales et dont les sorties fournissent respectivement les raies spectrales démultiplexées de façon à pouvoir ensuite mesurer les longueurs d'onde respectives de ces raies spectrales.

A titre d'exemple de réalisation, le dispositif de démultiplexage décrit permet de mesurer huit longueurs d'onde de huit transducteurs de Bragg photo-inscrits sur la fibre monomode 2.

Pour ce faire, comme on le verra mieux par la suite, chaque sortie est divisée en une voie de mesure munie d'un filtre et une voie de référence.

Ces deux voies aboutissent à deux photodiodes de la barrette 42 qui fournit alors des signaux électriques du genre des signaux s1 et s2 aux moyens d'émission 22.

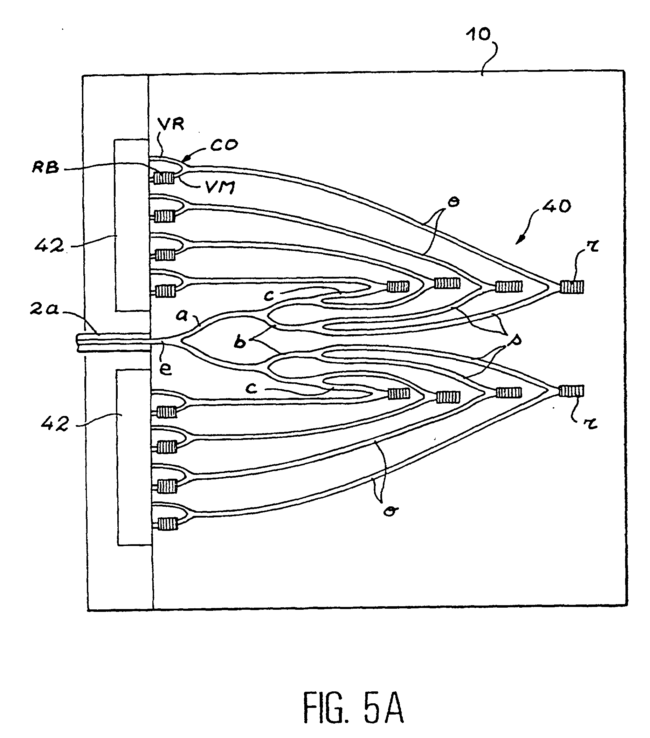

La technique de mesure des longueurs d'onde est expliquée ci-après en faisant référence aux figures 3 et 4.

Ceci s'applique tant au cas de la figure 2A qu'au cas de la figure 2B.

On retrouve en effet sur la figure 3 les notations déjà utilisées plus haut pour la figure 2A.

En ce qui concerne la figure 2B, chaque raie spectrale démultiplexée est également envoyée à la branche d'entrée d'un coupleur optique CO dont les deux branches de sortie constituent respectivement la voie de mesure VM et la voie de référence VR et l'on utilise aussi une photodiode reliée à la voie de mesure, qui est munie d'un filtre optique, et une autre photodiode reliée à la voie de référence.

La barrette 42 comprend donc au moins 8 paires de photodétecteurs puisqu'il y a 8 raies spectrales à observer (provenant des 8 transducteurs de Bragg de la fibre ou ligne de mesure).

La barrette peut comprendre un plus grand nombre de photodétecteurs (par exemple 256, 512 ou 1024), chaque sortie de guide pouvant émettre sur plusieurs photodétecteurs.

Ces photodétecteurs sont alors placés électriquement en parallèle afin de sommer leurs photocourants.

Le rapport s1/s2 peut être déterminé électroniquement par un conformateur utilisant des amplificateurs logarithmiques et anti-logarithmiques ou par un diviseur analogique.

Ce rapport peut aussi être déterminé numériquement par un ordinateur après conversion des signaux s1 et s2 sous forme numérique au moyen d'une carte d'acquisition analogique-numérique.

La raie spectrale d'un transducteur de Bragg est bien approximée par un profil gaussien centré sur une longueur d'onde $\lambda i$ (figure 4) que l'on peut mesurer et ayant une largeur caractéristique $\Delta\lambda$ et donc une largeur à mi-hauteur $2.(1n2)^{1/2}.\Delta\lambda$.

Si pour une longueur d'onde $\lambda$ proche de $\lambda i$, la transmission du filtre s'écrit $A.(\lambda-\lambda0)$, la relation liant la longueur d'onde centrale $\lambda i$ de la raie spectrale au rapport s1/s2 mesuré s'écrit :

$$s1 \;/\; s2 \;=\; T(\lambda i) \;=\; A\left[\lambda i \;-\; \lambda0 \;+\; \frac{\Delta\lambda}{2.\sqrt{\pi}}\right]$$

où A et $\lambda0$ sont deux paramètres caractéristiques du filtre F.

On voit donc que l'on peut calculer $\lambda i$ à partir du rapport s1/s2.

La figure 4 représente les variations de la transmission $T(\lambda)$ du filtre, exprimée en pourcentage, en fonction de la longueur d'onde $\lambda$.

On a représenté la largeur spectrale $\Delta$ à l'intérieur de laquelle la raie $\lambda i$ peut varier.

La partie sensiblement rectiligne I de $T(\lambda)$ est contenue dans une droite qui a pour pente A et coupe l'axe des $\lambda$ en $\lambda0$.

Le filtre F peut être un filtre à transition ou un filtre passe-bande.

Ce peut être un filtre coloré (fonctionnant par absorption) ou un filtre à multicouches diélectriques (fonctionnant par interférences).

On notera que l'exemple de la figure 2B nécessite le développement d'un composant d'optique intégré spécifique (composant de démultiplexage et de filtrage dont des exemples sont schématiquement représentés sur les figures 5A et 5B).

Au contraire, l'exemple de la figure 2A ne nécessite qu'un composant à fibre optique tel qu'un coupleur à séparation de puissance (muni du filtre).

La diode superluminescente 16 de la figure 2A (dont la largeur spectrale peut être de quelques dizaines de nanomètres) peut être remplacée par une diode électroluminescente ayant une largeur spectrale de l'ordre de quelques nanomètres.

De telles diodes sont commercialement disponibles aux longueurs d'onde utilisées pour les télécommunications optiques (1550 nm et 1350 nm) mais aussi à d'autres longueurs d'onde comme par exemple 820 nm.

Le spectre optique de ces diodes a une allure gaussienne et une largeur spectrale typique de 30 nm environ.

En ce qui concerne les moyens de démultiplexage et de filtrage 40 utilisés dans l'exemple de la figure 2B, la réalisation de tels moyens de démultiplexage et de filtrage par soudure de coupleurs à fibres optiques ne permet pas d'atteindre une grande densité d'intégration.

De plus, elle est difficile à mettre en oeuvre.

La solution utilisée dans l'exemple de la figure 2B consiste à réaliser un circuit optique spécifique qui est optiquement intégré sur un substrat en verre ou sur un substrat en silicium.

Pour ce faire, on utilise des substrats qui ont typiquement 1 mm d'épaisseur.

La figure 5A est une vue de dessus schématique de ces moyens de démultiplexage et de filtrage 40 tandis que la figure 5B est une vue de dessus schématique et partielle d'une variante de réalisation de ceux-ci.

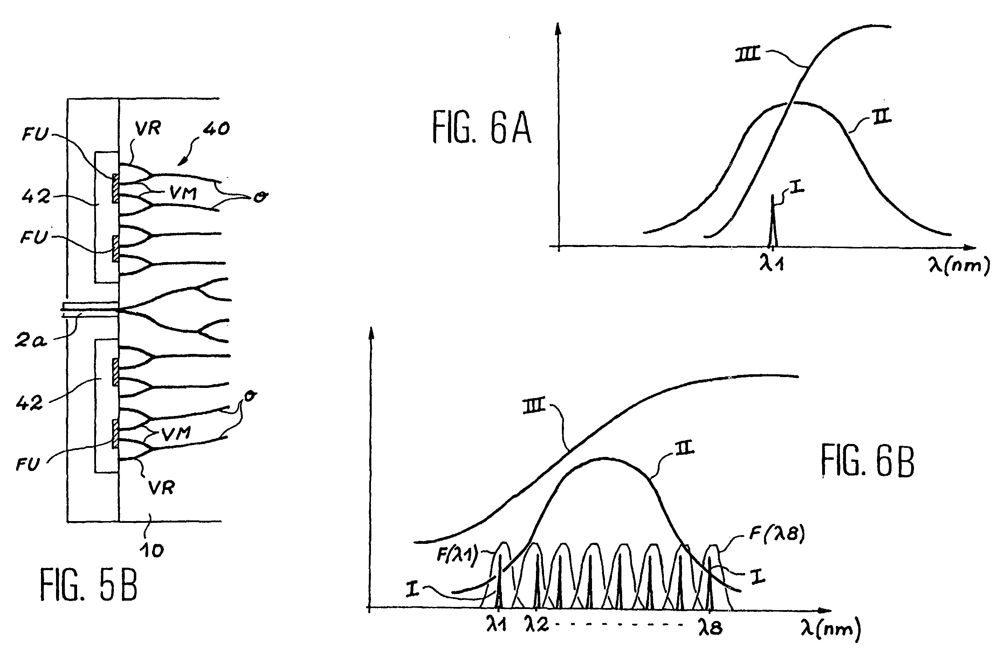

Les moyens de démultiplexage et de filtrage représentés sur les figures 5A et 5B possèdent huit voies de démultiplexage correspondant respectivement aux huit transducteurs multiplexés dans le spectre de la diode superluminescente (voir la figure 6B).

Ces moyens de démultiplexage et de filtrage comportent une partie de séparation de lumière qui a déjà été décrite dans le document (18).

Afin de minimiser les pertes optiques par courbure, les rayons de courbure des guides de lumière que comportent ces moyens de démultiplexage et de filtrage sont typiquement de l'ordre de quelques centimètres.

Ainsi, la séparation des guides nécessite des longueurs d'interaction assez importantes (de l'ordre de 2 cm environ pour huit sorties).

De ce fait la longueur du composant formant les moyens de démultiplexage et de filtrage est d'environ 5 cm pour une largeur d'environ 5 mm.

Les moyens de démultiplexage et de filtrage comportent aussi une partie supplémentaire qui met en oeuvre le principe de mesure par filtrage déjà décrit plus haut et appliqué dans le cas présent à l'optique intégrée plane.

On indique ci-après les techniques utilisables pour la fabrication des moyens de démultiplexage et de filtrage en optique intégrée sur verre puis en optique intégrée sur silicium.

En ce qui concerne la fabrication en optique intégrée sur verre, on utilise la technique de l'échange thermique d'ions de type Na$^+$, K$^+$ ou Cs$^+$ éventuellement assisté par un champ électrique.

Le principe de cette technique consiste à échanger des ions alcalins (par exemple les ions Na$^+$) qui sont déjà présents dans le verre avec d'autres ions (par exemple Ag$^+$ ou Tl$^+$) qui ont pour effet d'augmenter localement l'indice de réfraction du verre.

Cette façon de faire est abondamment décrite dans les documents (18) et (19).

Les pertes optiques, qui sont dues à la connexion entre la fibre optique 2 et l'un des guides et à l'atténuation dans les guides, sont considérablement diminuées grâce à la technique des guides enterrés.

Cette technique consiste à faire diffuser un premier dopage dans le substrat en verre sous champ électrique.

On obtient ainsi des guides caractérisés par des sections de dopage quasi-circulaires ayant un mode conforme à celui d'une fibre monomode (d'où une optimisation du recouvrement modal) et présentant des atténuations linéiques beaucoup plus faibles du fait de la disparition de la diffusion de surface (typiquement inférieures à 0,1 dB/cm).

En ce qui concerne la fabrication en optique intégrée sur silicium, on utilise la technique de dépôt chimique en phase vapeur renforcée par plasma (PECVD) qui est décrite dans les documents (20) et (21).

Sur un substrat en silicium, on dépose une couche de silice dont l'épaisseur vaut environ 8 μm.

Une couche de silice dopée au phosphore formant le coeur des guides (dont l'épaisseur est égale à 9 μm) est ensuite déposée puis gravée.

Une dernière couche de silice est alors déposée pour terminer les guides.

L'avantage de l'optique intégrée sur silicium est de pouvoir graver simultanément des rainures en forme de V pour le positionnement de fibres optiques monomodes.

A ce sujet, on consultera le document (20).

Dans les moyens de démultiplexage, on utilise des jonctions séparatrices.

Chaque jonction séparatrice peut être un coupleur ajusté à 50% (3 dB).

Cela implique d'ajuster précisément la longueur de couplage et l'intervalle entre les deux guides du coupleur en fonction de la longueur d'onde.

Cependant, chaque jonction séparatrice est de préférence une jonction Y.

Une telle jonction présente l'avantage d'être achromatique et d'être indépendante de la polarisation de la lumière.

Les moyens de démultiplexage et de filtrage représentés sur les figures 5A et 5B utilisent de telles jonctions Y.

Celles-ci séparent l'énergie de façon égale.

Avec huit voies de démultiplexage, la proportion d'énergie lumineuse incidente sur la barrette de photodiodes 42 est de l'ordre de 6% de l'énergie lumineuse injectée dans les moyens de démultiplexage et de filtrage 40.

Comme on le voit sur la figure 5A, étant donné que l'on veut séparer huit raies spectrales, on utilise sept jonctions Y montées en cascade, à savoir une jonction référencée a, deux jonctions référencées b et quatre jonctions référencées c.

On dispose ainsi de huit sorties s pour l'ensemble de ces jonctions Y.

On voit que la branche d'entrée de la jonction a est optiquement couplée à la branche correspondante 2a du coupleur 18 (figure 2B) pour constituer l'entrée e de l'ensemble de jonctions.

Les deux branches de sortie de cette jonction a sont respectivement couplées aux branches d'entrée des deux jonctions b.

Chacune des branches de sortie de ces jonctions b est elle-même couplée à la branche d'entrée de l'une des quatre jonctions c.

Les huit branches de sortie de ces jonctions c constituent les sorties de l'ensemble de jonctions qui sont respectivement couplées à huit réseaux de Bragg r.

Chacun de ces réseaux de Bragg r forme un réflecteur de lumière sélective en longueur d'onde.

Ce réflecteur de lumière a une bande passante en longueur d'onde qui contient le domaine spectral dans lequel l'une des huit raies spectrales est susceptible de fluctuer.

Ce réseau de Bragg réfléchit donc seulement cette raie avec une bonne performance en termes de diaphonie.

Chacun des réseaux de Bragg r est non seulement couplé, d'un côté, à l'une des sorties de l'ensemble de jonctions a, b, c mais encore couplé, par le même côté, à un guide d'onde optique o qui est destiné à propager la lumière correspondant à la raie démultiplexée, réfléchie par ce réseau de Bragg.

Chaque guide d'onde o est couplé à la branche d'entrée du coupleur CO correspondant, utilisé pour le filtrage.

De façon avantageuse, la fibre optique 2 est monomode à la longueur d'onde d'utilisation qui est typiquement égale à 1300 nm, 1550 nm ou encore 820 nm.

De façon avantageuse également, le coeur de la fibre optique 2 est dopé avec GeO$_2$ et cette fibre peut être à maintien de polarisation ou non.

Les réseaux de Bragg sont photo-inscrits sur la fibre optique sensible 2 (pour servir de transducteurs) et sur les guides des moyens de démultiplexage et de filtrage 40.

La réalisation des réseaux de Bragg peut se faire de deux façons : on peut soit graver chimiquement la gaine préalablement amincie d'un guide pour que cette gaine affleure le coeur du guide soit pratiquer une photo-inscription comme cela est décrit dans les documents (22), (23) et (24).

Remarquons que, dans le cas de la silice dopée au germanium, le procédé de fabrication du verre inclut un recuit qui rend le verre très peu photosensible en supprimant les défauts structurels.

Remarquons également que la technique de l'hydrogénation ou de la trempe à la flamme permet d'augmenter la photosensibilité des substrats de verre ou de silice sur silicium.

A ce sujet, on consultera les documents (23) et (24).

Le mode d'inscription optique préférentiel des réseaux est la méthode du masque de phase.

A ce sujet, on consultera le document (25).

On dépose tout d'abord une couche de résine photosensible (« photoresist ») à la tournette (« spin-coating ») et on réalise une insolation à travers un masque pour supprimer la résine après développement aux endroits où l'on veut insoler le substrat.

Les réseaux de démultiplexage photo-inscrits sont des réseaux à période variable comme cela est décrit dans les documents (25) et (26).

A titre d'exemple, la largeur spectrale utile vaut environ 1 nm à 1,3 $\mu$m (ce qui correspond à une déformation maximale de 1000 $\mu\varepsilon$ exercée sur la structure 6).

De plus, le décalage spectral induit par dérivé thermique est d'environ $\pm$ 0,5 nanomètre (ce qui correspond à une dérive thermique de +/- 50°C).

A ce sujet, on consultera le document (3).

Ainsi choisit-on une largeur spectrale de démultiplexage valant environ 3 nanomètres et prenant en compte une marge de précision du processus de photo-inscription.

A ce sujet, on se reportera aux figures 6A et 6B.

Les filtres de mesure peuvent être des réseaux de Bragg à périodes variables (figure 5A), dont le point de fonctionnement se situe sur un flanc de leur réponse spectrale, ou des filtres à multicouches diélectriques (figure 5B) qui fonctionnent en tant que filtres de transition (passe-haut ou passe-bas).

Ces deux sortes de filtres sont caractérisées par une dérive thermique de l'ordre de 0,01 nm/°C.

Ainsi, si tous les réseaux de Bragg (réseaux transducteurs photo-inscrits sur la fibre 2 et dans le micro-système) sont à la même température, les décalages spectraux se compensent exactement et aucune correction de température n'est nécessaire.

Si toutefois les réseaux de Bragg transducteurs et le micro-système ne sont pas à la même température, il est possible de prévoir un réseau de Bragg qui sert de référence pour la température et qui n'est pas soumis aux contraintes dans le matériau composite.

Pour ce faire, une solution consiste à insérer la fibre optique 2 dans un manchon en polymère (Téflon) avant insertion de cette fibre dans le matériau composite.

D'un point de vue technologique, il est plus avantageux de réaliser un dépôt multicouches que de graver plusieurs réseaux de Bragg supplémentaires.

Le principe de la réalisation d'un tel dépôt multicouches consiste à déposer une couche de résine photosensible sur le substrat (par exemple par pulvérisation électrostatique ou par trempé) et de faire un masquage afin de développer une zone sur deux.

Après évaporation la couche de résine photosensible est dissoute et entraîne ainsi le dépôt résiduel conformément à la technique connue sous le nom de « lift off ».

En ce qui concerne la sensibilité de la mesure, dans le cas de l'exemple de la figure 2A où l'on utilise un seul transducteur 4, le filtre F peut être un filtre optique de type Fabry-Pérot (multicouches) à transmission spectrale passe-bande qui assure une pente valant environ 25% par nanomètre.

Avec un tel filtre F, la précision de mesure de déformation par un transducteur est de quelques dizaines de $\mu\varepsilon$.

On se reportera à la figure 6A où l'on voit le spectre I du réseau de Bragg du transducteur unique correspondant à une longueur d'onde $\lambda$ unique notée $\lambda$1 ainsi que le spectre II de superluminescence de la diode 16 dont la largeur spectrale est de l'ordre de 30 nanomètres à plus de 50 nm.

On voit aussi la réponse spectrale III d'un filtre multicouches diélectriques.

En ce qui concerne la sensibilité de mesure dans le cas de l'exemple représenté sur la figure 2B, on se reportera à la figure 6B.

A titre d'exempple, la gamme de mesure est de 1000 $\mu\varepsilon$ pour chacun des huit transducteurs.

En considérant les figures 5A et 5B, on note que chaque guide d'onde $\underline{o}$ est couplé à la branche d'entrée du coupleur CO correspondant, qui fait partie du dispositif de mesure par filtrage.

Dans le cas de la figure 5A, la branche de sortie VM de ce coupleur porte un réseau de Bragg à périodes variables RB servant de filtre.

Dans le cas de la figure 5B, les branches de sortie VM aboutissent à des filtres à multicouches diélectriques identiques FU, chaque filtre FU étant commun à deux branches VM adjacentes dans l'exemple représenté.

Dans le cas de l'utilisation de filtres à multicouches diélectriques (figure 5B), un filtre à transition spectrale de type passe-haut ou passe-bas assure une pente de l'ordre de 2,5% par nanomètre.

La résolution est alors de l'ordre de 100 $\mu\varepsilon$ pour chaque transducteur.

A ce sujet on consultera le document (16).

Dans le cas d'un filtre par des réseaux de Bragg à périodes variables (figure 5A), la résolution devient de l'ordre de quelques 10 $\mu\varepsilon$.

En revenant à la figure 6B qui illustre schématiquement le principe du démultiplexage en longueur d'onde dans le cas de l'exemple de la figure 2B, la lumière que l'on veut analyser contient les huit raies spectrales I dont les longueurs d'onde $\lambda$ sont respectivement notées $\lambda 1$ à $\lambda 8$.

La largeur spectrale de chacune de ces raies est par exemple de l'ordre de 0,2 nanomètre.

La lumière que l'on veut démultiplexer est séparée, de façon équilibrée du point de vue de l'énergie lumineuse, par l'ensemble des jonctions Y.

On a vu que chacune des sorties de l'ensemble de jonctions Y aboutissait à un réseau de Bragg de démultiplexage r servant de réflecteur sur toute la bande spectrale de mesure de chacun des transducteurs.

On voit sur la figure 6B les fonctions de transfert spectrales respectives $F(\lambda_i)$ des huit réseaux de Bragg de démultiplexage où i varie de 1 à 8, chacune de ces fonctions contenant le domaine spectral d'évolution d'une raie (largeur spectrale de l'ordre de 0,2 nanomètre) du spectre optique de l'énergie lumineuse incidente.

Par exemple, la largeur spectrale à -3 dB est de l'ordre de 3 nanomètres pour chaque fonction de transfert spectrale.

L'intersection des domaines délimités par deux fonctions de transfert spectrales adjacentes est très faible.

On voit aussi sur la figure 6B le spectre de superluminescence II de la diode qui excite les réseaux de Bragg transducteurs et dont la largeur spectrale est de l'ordre de 30 nanomètres à 50 nanomètres.

On a également représenté la réponse spectrale III qui est commune à tous les filtres à multicouches diélectriques (filtres passe-haut dans l'exemple représenté sur la figure 6B).

On précise que dans le cas de l'utilisation des huit réseaux de Bragg de mesure RB (figure 5A) il y a huit réponses spectrales différentes correspondant respectivement aux raies spectrales $\lambda 1$ à $\lambda 8$ que l'on veut déterminer et ces réseaux de Bragg de mesure ont chacun une réponse spectrale linéaire autour de la longueur d'onde du réseau de Bragg transducteur correspondant.

Ajoutons que les moyens de démultiplexage comprenant des réseaux de Bragg (« Bragg gratings ») pourraient être remplacés par des moyens de démultiplexage à réseau gravé ou à réseau de microguides PHASAR.

De même, le filtrage pourrait être effectué au moyen de filtres à multicouches diélectriques différents les uns des autres, respectivement associés aux voies de mesure, ou au moyen d'interféromètres de Mach-Zehnder.

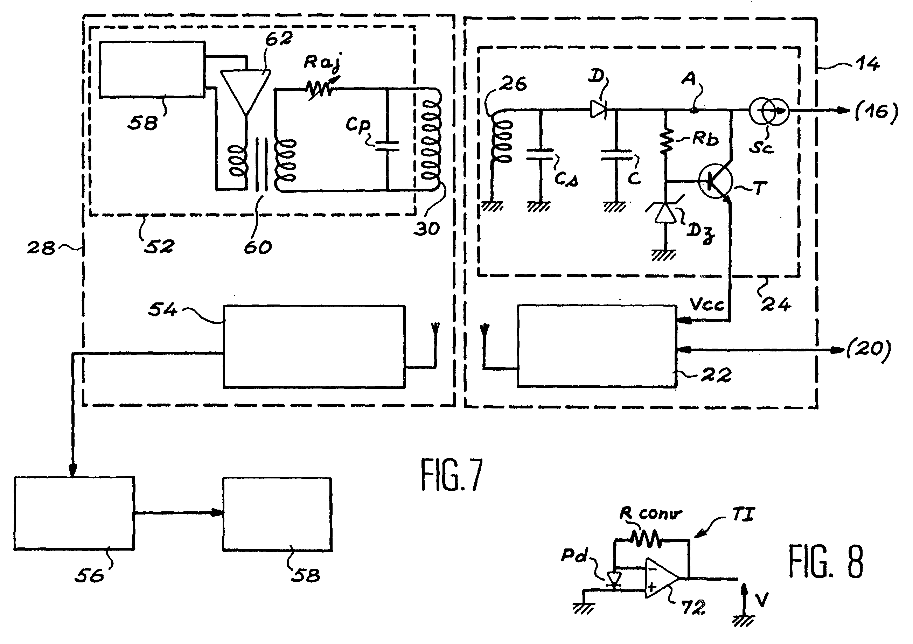

On décrit maintenant le circuit électronique 14 et le module externe 28 associé à ce circuit électronique en faisant référence à la figure 7.

Le circuit électronique 14 comprend les moyens d'émission 22 et les moyens 24 d'alimentation électrique des moyens d'émission 22 et de la diode superluminescente 16 faisant partie du circuit optique 12.

Ces moyens d'alimentation 24 comprennent, comme on l'a vu, la bobine secondaire 26.

Le module externe 28 comprend la bobine primaire 30, des moyens 52 d'alimentation de cette bobine primaire et des moyens 54 de réception des signaux émis par les moyens d'émission 22.

On voit également sur la figure 7 des moyens 56 de traitement des signaux fournis par ces moyens de réception 54 et des moyens 58 de visualisation des résultats obtenus par ces moyens de traitement 56.

Les moyens d'alimentation 24 sont tels que représentés sur la figure 7 et comprennent donc la bobine secondaire 26 associée à une capacité d'accord Cs, une diode D, une capacité C et un transistor de régulation T qui est muni d'une résistance de base Rb, d'une diode Zener Dz et d'une source de courant Sc.

Les moyens 52 d'alimentation de la bobine primaire 30 sont tels que représentés sur la figure 7 et comprennent donc un oscillateur primaire 58, dont la fréquence vaut par exemple 28 kHz, un transformateur-générateur 60 dont le circuit primaire est alimenté par l'oscillateur 58 par l'intermédiaire d'un amplificateur 62.

Le circuit secondaire de ce transformateur 60 alimente la bobine primaire 30 par l'intermédiaire d'une résistance ajustable Raj et une capacité d'accord Cp associée à la bobine primaire 30.

On a vu que les moyens d'alimentation 24 comportaient un circuit de redressement de la tension recueillie au niveau de la bobine secondaire 26.

De façon avantageuse il s'agit d'un circuit de redressement en simple alternance.

Cependant on pourrait utiliser à la place de celui-ci un circuit de redressement en double alternance employant un pont de Graetz (dont le rendement est supérieur).

A ce sujet, on pourra se reporter au document (10).

On précise que la réalisation de l'alimentation par induction de la diode 16 et des moyens d'émission 22 peut se faire de deux façons.

La première façon consiste à utiliser un circuit accordé couplé et c'est ce que l'on voit sur la figure 7 tandis que la seconde façon consiste à utiliser un transformateur purement inductif (sans capacité d'accord).

Dans une variante de réalisation on ajoute un filtre de déparasitage entre la diode D et la résistance Rb, au point A de la figure 7, afin de filtrer la composante d'oscillation résiduelle et de limiter les interférences radiofréquence avec les moyens d'émission 22 situés près des moyens d'alimentation 24 (atténuation des harmoniques d'ordre supérieur) .

Ce filtre, qui est appelé « filtre en $\pi$ », est constitué d'une inductance en série et de deux capacités à la masse et possède une fréquence de coupure de l'ordre de 1 à 10 kHz.

Pour un redressement en simple alternance, la résistance de charge apparente R'c vue par la bobine secondaire 26 est égale au quart de la résistance Rc de charge de l'ordre de 60 $\Omega$.

Dans le cas d'un redressement en double alternance, cette résistance de charge apparente est égale à la moitié de Rc.

Dans le cas de la figure 7, chacune des bobines secondaire et primaire est connectée en parallèle à une capacité d'accord telle que la fréquence d'accord de Thomson $\underline{f}$ corresponde à la fréquence de modulation selon la relation d'accord bien connue :

$$f = \frac{1}{2.\pi.\sqrt{L.C}}\sqrt{1 - \frac{1}{4Q^2}} \qquad (1)$$

Pour chaque circuit (primaire ou secondaire), dans cette formule, L représente l'inductance, C la capacité et Q est le facteur de qualité de l'oscillateur inductance/capacité, Q étant défini par

$$Q = \frac{1}{R}\cdot\sqrt{\frac{L}{C}} \qquad (2)$$

Ce facteur de qualité Q de cet oscillateur dépend de la résistance du circuit primaire et de la résistance R du circuit secondaire ramenée au circuit primaire.

Le circuit oscillant secondaire est constitué de la bobine secondaire 26 (par exemple du type bobine « microstrip »), dont l'inductance totale est notée Ls, et de la capacité d'accord Cs.

Le redressement mono-alternance est assuré par la diode D et le filtrage (stockage) est assuré par la capacité C de l'ordre de 1 μF.

La résistance de base Rb du transistor de régulation T est de l'ordre 1 kΩ.

La diode Zener Dz est destinée à maintenir la base du transistor à un potentiel constant valant typiquement quelques volts.

L'émetteur de ce transistor alimente les moyens d'émission 22 (tension Vcc) tandis que la diode superluminescente 16 est alimentée par la source de courant Sc de l'ordre de 50 mA.

Une telle source de courant est commercialement disponible par exemple sous la référence LM134.

Ce peut être un transistor à effet de champ dont la porte (« gate ») est reliée au drain par une résistance de polarisation.

La tension est alors appliquée à la source de ce transistor à effet de champ et le courant stabilisé est prélevé après la résistance (sur la porte).

Le circuit constitué de la diode Zener, de la résistance de polarisation et du transistor existe de façon standard.

On peut par exemple utiliser le circuit commercialisé par la société Burr-Brown sous la référence REF05.

Les circuits primaire et secondaire étant accordés, la fonction de transfert en puissance est une fonction passe-bande centrée sur la fréquence de résonance qui dépend de la résistance selon la formule (1).

De façon avantageuse, il est possible d'ajuster la puissance transmise en ajustant la résistance Raj du circuit primaire ou la tension de l'oscillateur 58.

Dans le cas du transformateur accordé, la fréquence de modulation du signal au niveau du circuit primaire peut aussi être ajustée.

Le second mode de réalisation de l'alimentation par induction qui consiste en un transformateur purement inductif est identique à ce qui est représenté sur la figure 7 excepté que les capacités Cp et Cs sont supprimées.

Dans ce cas le couplage en énergie est bien moins sélectif en fréquence.

Le réglage de la puissance se fait alors par la résistance Raj ou en modifiant la tension de l'oscillateur 58.

Considérons maintenant le transformateur constitué par la bobine primaire, la bobine secondaire et le noyau 32 (figure 1) associé à la bobine primaire.

Ce transformateur a, comme « entrefer », le matériau composite par exemple de type carbone-époxy dont la perméabilité magnétique est très voisine de 1.

Le rapport d'enroulement a peu d'importance car l'application recherchée est le transfert d'énergie.

Ce rapport d'enroulement est fixé par les contraintes de dimensionnement sachant que le nombre de spires de la bobine secondaire est limité (par la capacité de photogravure classique) à une centaine de spires environ (voir le document (27)), la largeur d'une spire et l'intervalle entre spires étant de l'ordre de 50 microns à 100 microns.

Cette bobine secondaire peut être réalisée par la technique classique des circuits imprimés.

A ce sujet on consultera les documents (27) et (28).

Typiquement, les inductances alors obtenues sont de l'ordre de quelques dizaines de $\mu$H pour environ 50 tours et des diamètres externes de l'ordre de 2 cm à 3 cm.

Le principe du dépôt des électrodes sur un substrat en verre ou en silicium est emprunté à la technique de réalisation des micro-transformateurs planaires.

A ce sujet on consultera le document (29).

L'inductance secondaire étant limitée par la technique de photo-gravure à quelques dizaines de $\mu$H, on utilise de façon avantageuse une bobine primaire de très forte inductance afin d'augmenter au mieux la mutuelle inductance.

Cela se traduit par un rapport de transformation secondaire/primaire $V_{sec}/V_{pri}$ très petit.

Dans le cas d'un transformateur purement inductif, ce rapport de transformation à vide est donné par la formule suivante :

$$\frac{V_{sec}}{V_{pri}} = K. \ \frac{\sqrt{L_p L_s}.\omega}{\sqrt{R_p^2 + L_p^2.\omega^2}} \tag{3}$$

Dans cette formule Ls représente l'inductance totale de la bobine secondaire, Lp représente l'inductance totale de la bobine primaire, Rp représente la résistance de cette bobine primaire, $\omega$ représente la pulsation de l'oscillateur et K représente le coefficient de couplage.

Pour une réactance Lp.$\omega$ supérieure à la résistance Rp on retrouve la loi classique des rapports d'enroulements.

Le rapport de transformation en couplage lâche est directement fonction du coefficient de couplage K du partage des flux entre les bobines primaire et secondaire.

De façon avantageuse, dans l'exemple représenté sur la figure 1, le rapport de transformation à vide est de l'ordre de 80 à 100.

On a coutume de séparer l'inductance des circuits primaire et secondaire en deux contributions, une inductance utile qui assure le couplage de l'énergie et une inductance de fuite du circuit magnétique.

Dans les transformateurs classiques le flux est très important et la réluctance du circuit magnétique utile est la plus faible possible afin que les inductances utiles soient les plus fortes possibles.

Dans l'exemple de la figure 1, le transformateur équivalent est caractérisé par de fortes inductances de fuite car le circuit magnétique est bouclé en grande partie par l'air et le matériau composite.

Ainsi la réluctance du circuit magnétique utile est comparable -voire plus forte- que la réluctance des fuites.

L'inductance mutuelle M est donnée par la formule suivante :

$$M^2 = K^2 .L_p .L_s. \tag{4}$$

Dans cette formule K est un facteur expérimental de couplage inductif défini plus haut qui prend en compte les inductances de fuite du circuit magnétique.

La résistance ramenée au circuit primaire (partie réelle de l'impédance ramenée au circuit primaire) est donnée par la formule suivante :

$$R_{éq} = R_p + K^2. \frac{L_p. L_s. \omega^2}{\left[\left(R_s + R_c'\right)^2 + L_s^2. \omega^2\right]} . \left(R_s + R_c'\right) \tag{5}$$

Dans cette formule $\omega$ est la pulsation d'excitation (exprimée en radians par seconde), $R_s$ est la résistance de la bobine secondaire et $R_c'$ est la résistance de charge constituée par le circuit électronique 14.

Expérimentalement, pour un circuit primaire non accordé (par exemple $L_p$=9 mH) et un circuit secondaire accordé ($L_s$ de l'ordre de 20 $\mu$H, $C_s$=1,3 $\mu$F) , la résistance de charge optimale est de l'ordre de quelques ohms.

Dans le cas d'un transformateur non accordé (purement selfique), la résistance secondaire optimale évolue de quelques k$\Omega$ ($L_s$=9 mH) à quelques dizaines d'ohms ($L_s$ de l'ordre de 50 $\mu$H).

L'impédance de charge est définie par la source de courant Sc qui alimente la diode superluminescente 16.

Typiquement, pour un courant débité de l'ordre de 50 mA sous 3V la résistance de charge vaut environ 60 $\Omega$.

Cette résistance de charge secondaire est donc adaptée.

Dans le cas d'une transmission à travers une épaisseur de 2 mm de matériau composite, la puissance maximale couplée est de l'ordre de 400 mW pour cette résistance de charge de l'ordre de 60 $\Omega$.

Après redressement en mono-alternance, la puissance est légèrement inférieure à 200 mW.

Cette puissance excède le minimum de puissance requis (de l'ordre de 100 mW) de sorte que le réglage en puissance n'est pas critique.

Les contraintes de dimensionnement imposent donc de travailler à de fortes fréquences de modulation d'induction (typiquement quelques centaines de kHz) afin d'augmenter le transfert d'énergie par induction et diminuer la taille des capacités d'accord et de filtrage.

Cette augmentation de fréquence permet ainsi de compenser la plus faible inductance de la bobine secondaire dans les limites des pertes d'énergie par courants de Foucault et par hystérésis dans le matériau composite et le noyau 32 ainsi que dans les limites de modulation imposées par la fréquence de coupure des bobines et l'effet de peau dans les fils conducteurs au-delà de 1 MHz.

On précise que le noyau 32 est choisi en fonction du domaine des fréquences d'utilisation considéré.

Pour une application dans le domaine de l'aéronautique on utilise de façon avantageuse la fréquence de 28 kHz étant donné l'absence d'interférences de cette fréquence fondamentale et de ses harmoniques avec les fréquences utilisées dans les systèmes électroniques de navigation.

On considère à présent le codage et la transmission des données c'est-à-dire des signaux fournis par les moyens d'émission 22 ainsi que la réception de ces données par le module 54.

De façon avantageuse les photo-diodes fonctionnent en régime photo-conducteur afin de fournir une tension électrique linéaire en fonction de la puissance optique incidente.

Pour ce faire, chaque photo-diode est connectée à l'entrée d'un montage de type trans-impédance TI schématiquement illustré par la figure 8 et utilisant une résistance de conversion Rconv de l'ordre de quelques centaines de k$\Omega$ à 1 M$\Omega$.

Sachant que le photo-courant reçu peut aller de quelques dizaines de nA jusqu'à quelques $\mu$A la tension V observée est de l'ordre de 0,1 V à 1 V selon la relation de conversion simple :

$$V = Rconv.Iph$$

Dans cette formule Iph est le photo-courant qui est directement fonction du flux optique reçu par la photo-diode Pd correspondant au montage considéré.

Le boîtier de conversion 70 faisant partie des moyens d'émission 22 dont des exemples sont schématiquement représentés sur les figures 9A, 10A et 11A assure cette conversion de l'intensité en tension pour toutes les photo-diodes.

Selon le premier mode de réalisation de l'invention particulier schématiquement représenté sur la figure 2A ce boîtier de conversion 70 comprend donc deux montages de trans-impédance TI.

Selon le deuxième mode de réalisation de l'invention schématiquement représenté par la figure 2B ce boîtier de conversion 70 comprend 2N montages de trans-impédance TI (N étant égal à 8 étant donné qu'on utilise 8 transducteurs dans l'exemple considéré).

Comme le montre la figure 8 chaque montage de trans-impédance TI comprend un amplificateur opérationnel 72 dont l'entrée - est reliée à l'anode de la photo-diode associée Pd et dont l'entrée + est reliée à la cathode de cette photo-diode Pd.

La résistance de conversion associée Rconv relie l'entrée - de cet amplificateur 72 à la sortie de celui-ci.

Les moyens d'émission 22 sont soumis à une forte contrainte d'optimisation du dimensionnement géométrique et de la consommation électrique.

Dans ce qui suit on décrit deux modes de réalisation particuliers de ces moyens d'émission 22 et des moyens de réception associés 54.

Le premier mode de réalisation particulier utilise un multiplexage temporel des signaux suivi d'une modulation en fréquence.

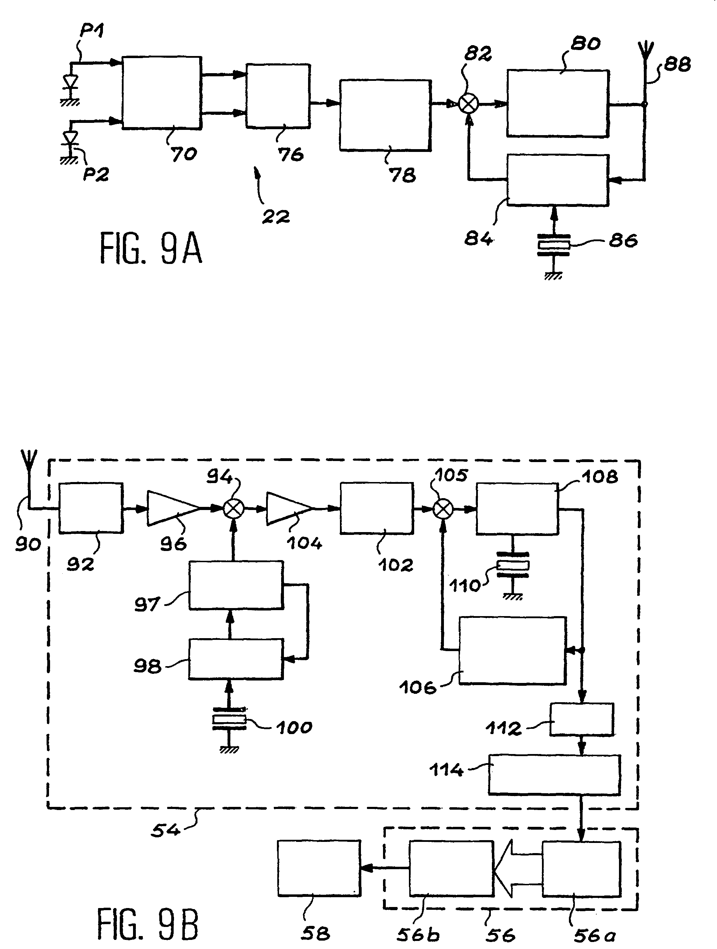

Ce premier mode de réalisation particulier est schématiquement représenté sur la figure 9A pour les moyens d'émission et sur la figure 9B pour les moyens de réception associés dans le cas de l'exemple de l'invention représenté sur la figure 2A (transducteur unique).

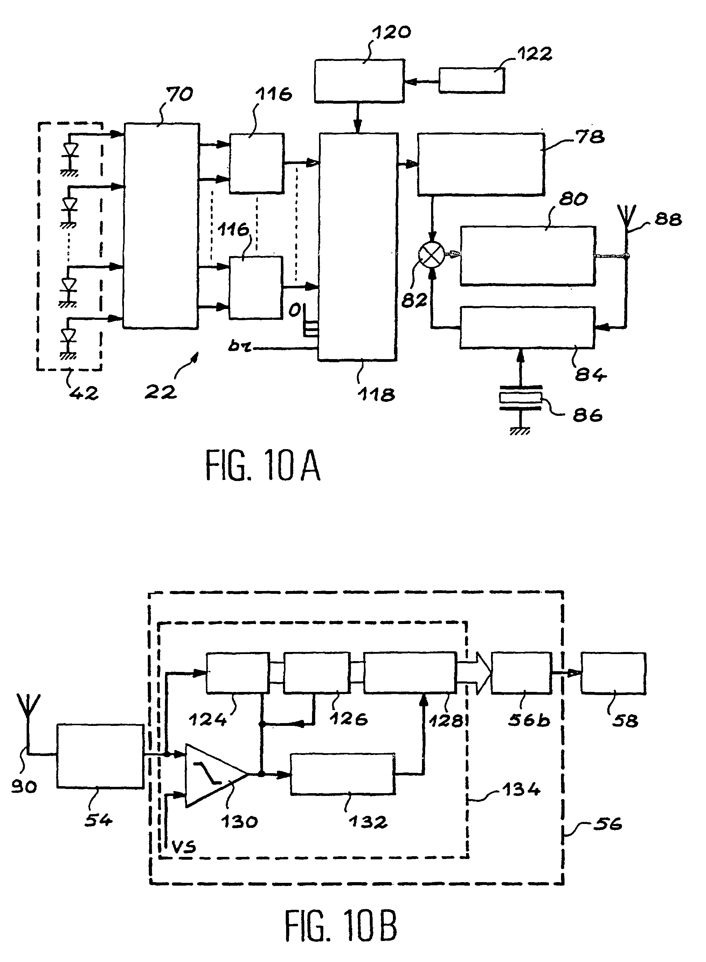

Ce premier mode de réalisation particulier est schématiquement représenté sur la figure 10A pour les moyens d'émission et sur la figure 10B pour les moyens de réception associés dans le cas de l'exemple de l'invention représenté sur la figure 2B (transducteurs multiples : 8).

Le second mode de réalisation particulier utilise une modulation d'amplitude à porteuses multiples, suivie d'une modulation en fréquence.

Ce second mode de réalisation particulier ne s'applique qu'au cas du deuxième exemple de l'invention représenté sur la figure 2B (transducteurs multiples).

En ce qui concerne le cas de l'exemple représenté sur la figure 2A (transducteur unique), un seul signal est à transmettre selon la représentation des figures 9A et 9B.

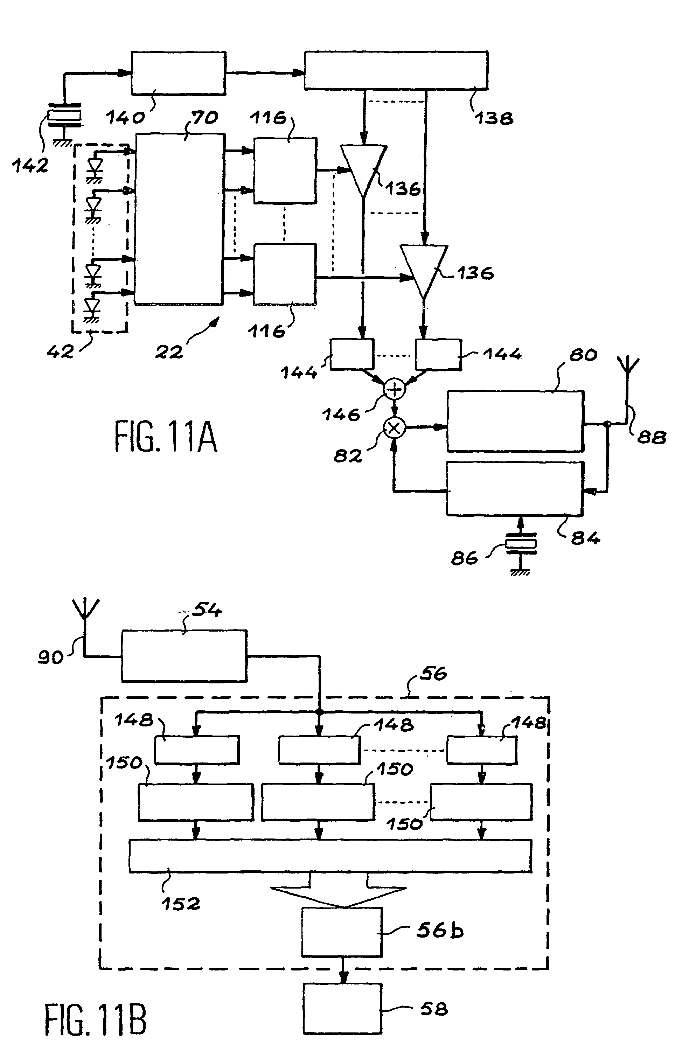

Ce second mode de réalisation particulier est schématiquement représenté sur la figure 11A pour les moyens d'émission et sur la figure 11B pour les moyens de réception associés.

De façon avantageuse les fréquences porteuses sont soit comprises entre 800 MHz et 1000 MHz soit égales à 2,45 GHz voire à 5,8 GHz.

Les moyens d'émission 22 de la figure 9A sont tels qu'on le voit sur cette figure et comprennent donc :

- le boîtier de conversion 70 ayant deux entrées respectivement reliées aux deux photodiodes P1 et P2 de la figure 2A et deux sorties fournissant respectivement un signal de mesure et un signal de référence,
- un diviseur 76 qui reçoit en entrée ce signal de mesure et ce signal de référence et qui fournit en sortie un signal égal au rapport de ce signal de mesure à ce signal de référence,
- un oscillateur contrôlé en tension 78 (autour de la fréquence notée f1) qui reçoit en entrée le signal de sortie du diviseur 76,
- un autre oscillateur contrôlé en tension 80 (autour de la fréquence porteuse notée fp),
- une boucle à verrouillage de phase 84 dont l'entrée est reliée à la sortie de l'oscillateur contrôlé en tension 80, et
- un circuit multiplicateur 82 dont les deux entrées sont respectivement reliées aux sorties de l'oscillateur 78 et de la boucle à verrouillage de phase 84.

Cette boucle à verrouillage de phase 84 est munie d'un oscillateur à quartz 86.

Les moyens d'émission de la figure 9A comprennent aussi une antenne d'émission 88 qui est reliée à la sortie de l'oscillateur 80 et à l'entrée de la boucle 84.

Les moyens de réception 54 (en modulation de fréquence), munis d'une antenne de réception 90, sont tels que représentés sur la figure 9B et comprennent donc :

- un filtre passe-bande 92 qui a comme fréquence centrale la fréquence notée fp et dont l'entrée est reliée à cette antenne 90,
- un circuit multiplicateur dont une entrée est reliée à la sortie du filtre 92 par l'intermédiaire d'un amplificateur 96,
- un oscillateur local 97 à une fréquence notée fOL,
- une boucle à verrouillage de phase 98 associée à cet oscillateur 97 et munie d'un oscillateur à quartz 100, le circuit multiplicateur recevant à sa deuxième entrée le signal de sortie de l'oscillateur local 97,
- un filtre passe-bande 102 qui a comme fréquence centrale une fréquence intermédiaire notée $f_I$ égale à fOL-fp et qui est relié à la sortie du circuit multiplicateur 94 par l'intermédiaire d'un autre amplificateur 104,
- un autre circuit multiplicateur 105 dont une entrée est reliée à la sortie du filtre 102,
- un autre oscillateur contrôlé en tension 106 autour de la fréquence $f_I$ dont la sortie est reliée à l'autre entrée du circuit multiplicateur 105,
- une autre boucle à verrouillage de phase 108 dont l'entrée est reliée à la sortie de ce circuit multiplicateur 105 et qui est munie d'un oscillateur à quartz 110 et
- un filtre passe-bande 112 qui a comme fréquence centrale la fréquence f1 et dont l'entrée est reliée à la sortie de la boucle à verrouillage de phase 108 et à l'entrée de l'oscillateur contrôlé en tension 106.

L'ensemble constitué du multiplicateur 105, de la bouche à verrouillage de phase 108 et de son oscillateur à quartz 110, et de l'oscillateur contrôlé en tension constitue un démodulateur de fréquence.

Les moyens de réception 54 comprennent également un autre démodulateur de fréquence 114 (fréquence f1) qui reçoit en entrée le signal de sortie du filtre 112 et qui fournit en sortie le signal démodulé (en bande de base).

Ce signal est alors traité dans les moyens 56.

Dans ces moyens 56, ce signal (sous forme analogique) est converti sous forme numérique par un convertisseur analogique-numérique 56a dont le signal de sortie est traité par un ordinateur 56b qui permet de calculer la longueur d'onde de la raie spectrale correspondant à l'unique capteur 4 de la figure 2A d'une manière expliquée plus haut.

Les mesurandes c'est-à-dire les paramètres à mesurer (température, déformation) sont alors calculés grâce aux relations de comportement des réseaux de Bragg (voir références (1) ou (3)).

Les résultats de ce calcul sont affichés par les moyens 58.

L'intérêt d'effectuer la division (dans le diviseur 76 de la figure 9A) avant l'émission des données tient à la diminution du nombre de porteuses.

Les données sont émises vers l'extérieur du matériau composite par modulation de fréquence pour s'affranchir de l'atténuation par le matériau.

L'oscillateur local 97 peut être un oscillateur contrôlé en tension du genre de celui qui est commercialisé par la société Murata sous la référence MQE000.

Le diviseur 76 peut être un circuit intégré du genre de celui qui est commercialisé par la société Burr-Brown sous la référence MPY600.

On considère maintenant les moyens d'émission 22 schématiquement représentés sur la figure 10A et associés aux moyens de réception 54 schématiquement représentés sur la figure 10B.

Les moyens d'émission 22 de la figure 10A comprennent un boîtier de conversion 70 qui reçoit en entrée les signaux des N couples de photo-diodes formant la barrette 42 de la figure 2B (N étant par exemple égal à 8 comme on l'a vu) et qui fournit en sortie N couples de signaux de mesure et de référence.

On voit également sur la figure 10A un ensemble de N diviseurs 116, chacun d'entre eux recevant en entrée un couple de signaux de mesure et de référence et fournissant en sortie le rapport de ces deux signaux.

Les moyens 22 de la figure 10A comprennent aussi un multiplexeur 118 qui reçoit en entrée les signaux des diviseurs 116 et qui est commandé par un compteur 120 muni d'une horloge 122.

Les moyens d'émission 22 de la figure 10A comprennent en outre l'oscillateur 78, l'oscillateur 80, le circuit multiplicateur 82, la boucle à verrouillage de phase 84 et l'oscillateur à quartz 86 ainsi que l'antenne 88, agencés comme sur la figure 9A, l'entrée de l'oscillateur 78 étant reliée à la sortie du multiplexeur 118 dans le cas de la figure 10A.

Les moyens de réception 54 de la figure 10B sont identiques aux moyens de réception 54 de la figure 9B et sont encore munis de l'antenne 90.

Dans le cas de la figure 10B, les moyens 56 de traitement des signaux fournis par les moyens 54 comprennent un ordinateur 56b et un ensemble électronique de démultiplexage temporel 134 comportant :

- un convertisseur analogique-numérique 124,
- un registre série 126,
- un registre parallèle 128,
- un comparateur 130, et
- un monostable redéclenchable 132 qui sont agencés comme cela est représenté sur la figure 10B.

Comme on le voit sur cette figure 10B, les signaux de sortie des moyens 54, provenant du démodulateur 114 (figure 9B), sont envoyés au convertisseur analogique-numérique 124 et au comparateur 130 qui reçoit aussi en entrée une tension de seuil VS fixée par les utilisateurs afin de déclencher sur toutes les impulsions issues du récepteur en modulation de fréquence 54.

Les moyens de réception 22 de la figure 10B comprennent aussi un ordinateur 56b qui traite les signaux de sortie du registre parallèle 128 pour calculer les valeurs des longueurs d'onde des raies spectrales correspondant aux capteurs 4 de la figure 2B.

Les mesurandes (température, déformation) sont alors calculés grâce aux relations de comportement des réseaux de Bragg.

Les moyens 58 affichent les mesurandes ainsi calculés.

Dans l'exemple illustré par les figures 10A et 10B les signaux sont observés séquentiellement.

La bande passante est donc plus faible que dans le cas des figures 9A et 9B.

Un codage de repérage des transducteurs 4 est nécessaire (timing).

Pour ce faire une solution possible consiste à utiliser, en tant que compteur 120, un compteur par 16 (pour huit transducteurs 4).

Le signal émis est donc constitué d'un bit 1 de repérage (référence br sur la figure 10A), de sept bits à zéro et du signal constitué de l'échantillonnage des huit signaux à transmettre.

Après réception, les signaux servent à déclencher la conversion analogique-numérique.

Le bit 1 de repérage est détecté en redéclenchant le monostable 132 (de durée T légèrement supérieure à la période des impulsions de l'horloge) et en mettant ce monostable à zéro à chaque impulsion.

L'impulsion de déclenchement apparaît à la sortie du monostable 132 dès qu'il n'y a plus d'impulsion.

Cette impulsion sert à autoriser le transfert du contenu du registre série 126 dans le registre parallèle 128 pour que ce contenu soit lu par l'ordinateur 134 à chaque cycle de balayage.

Cette impulsion peut aussi servir à gérer l'interruption de l'ordinateur référencé 56b (le registre parallèle 128 n'étant plus utile dans ce cas).

Les moyens d'émission 22 de la figure 11A comprennent encore le boîtier de conversion 70 associé aux N couples de photodiodes ainsi que les N diviseurs 116 dont les entrées sont reliées aux sorties du boîtier de conversion 70 comme dans le cas de la figure 10A.

Les moyens 22 de la figure 11A comprennent aussi N convertisseurs numérique-analogique 136 ainsi qu'une interface logique 138 à N sorties.

Cette interface logique 138 reçoit en entrée des signaux d'une horloge 140 à 900 MHz, associée à un oscillateur à quartz 142.

L'interface logique 138 engendre N signaux de sortie sinusoïdaux à des fréquences f1=50 kHz, f2=100 kHz, ..., fN=50xN kHz à partir des impulsions fournies par l'horloge 140.

Ces signaux de sortie de l'interface logique 138 sont envoyés aux entrées respectives des convertisseurs numérique-analogique 136 dont les ponts sont respectivement alimentés par les signaux de sortie des N diviseurs 116.

Les moyens d'émission 22 de la figure 11A comprennent aussi N filtres passe-bande 144 dont les fréquences centrales respectives sont les fréquences f1, f2, ..., fN et dont les entrées sont respectivement reliées aux sorties des convertisseurs numérique-analogique 136.

On voit également sur la figure 11A un circuit sommateur 146 ayant N entrées respectivement reliées aux sorties des filtres 144.

On voit aussi l'ensemble constitué par le circuit multiplicateur 82, l'oscillateur contrôlé en tension 80, la boucle à verrouillage de phase 84, l'oscillateur à quartz 86 et l'antenne 88 de la figure 9A, agencés de la même façon que sur cette figure 9A, l'entrée du circuit multiplicateur 82 étant reliée à la sortie du circuit sommateur 146.

Les moyens de réception 54 de la figure 11B sont identiques aux moyens de réception 54 de la figure 9B et sont encore munis de l'antenne de réception 90.

La sortie de ces moyens 54 constituée par la sortie du démodulateur 114 (figure 9B) est reliée aux moyens de traitement 56.

Ceux-ci comprennent N filtres passe-bande 148 dont les fréquences centrales valent respectivement f1, f2, ..., fN et la sortie du démodulateur 114 des moyens 54 est reliée à l'entrée de chaque filtre 148.

On voit également sur la figure 11B N démodulateurs d'amplitude 150 dont les fréquences d'hétérodynage valent respectivement f1, f2, ..., fN et dont les entrées sont respectivement reliées aux filtres 148.

Les moyens de traitement 56 de la figure 11B comprennent aussi un convertisseur analogique-numérique 152 ayant N entrées respectivement reliées aux N sorties des démodulateurs 150.

Les signaux de sortie de ce convertisseur analogique-numérique 152 sont envoyés à un ordinateur 56b qui calcule les longueurs d'onde des raies spectrales des transducteurs 4 de la figure 2B et on en déduit les valeurs des mesurandes.

Les résultats des calculs sont affichés par les moyens d'affichage 58.

L'intérêt de l'exemple représenté sur les figures 11A et 11B réside dans le fait que de basses fréquences porteuses peuvent être générées sans employer aucun composant discret volumineux (auquel cas des capacités et des inductances importantes seraient nécessaires) et que ces fréquences peuvent être fixées précisément.

Les démodulateurs d'amplitude 150 peuvent être constitués de mélangeurs (aux fréquences f1, f2, ..., fN) suivis de filtres passe-bas.

La présente invention s'applique plus particulièrement à la surveillance in situ de structures « intelligentes ».

On peut par exemple mesurer des contraintes ou des températures réparties en plusieurs endroits d'une structure en matériau composite que l'on veut surveiller.

L'aéronautique est l'un des secteurs d'application privilégiés de cette invention.

Parmi les composants avec lesquels le système objet de l'invention peut être utilisé, on peut citer les radomes ainsi que les nervures et les longerons des ailes d'avions.

Ce système n'est pas seulement utilisable avec des matériaux composites.

Il est également utilisable avec d'autres matériaux amagnétiques (ayant une perméabilité magnétique relative sensiblement égale à 1) comme par exemple le béton : l'invention peut alors par exemple s'appliquer à la surveillance de bâtiments et de barrages.

Revenons à la figure 5A. La lumière provenant par exemple de capteurs présents sur une ligne de mesure et amenée par la fibre optique 2a parcourt un séparateur en énergie qui fournit (à titre d'exemple) 8 signaux de même caractéristique spectrale à chacune de ses sorties. Chaque sortie correspond à un bras d'une jonction séparatrice en longueur d'onde opérant en réflexion et renvoyant l'énergie filtrée dans un guide o. Sur chacune de ces jonctions est photo-inscrit un réseau de Bragg r qui sépare un domaine de longueur d'onde disjoint des autres (voir figure 6B) et assure la fonction de démultiplexage spectral pour chacun des capteurs présents sur la ligne de mesure. Cette jonction séparatrice peut être réalisée de deux façons.

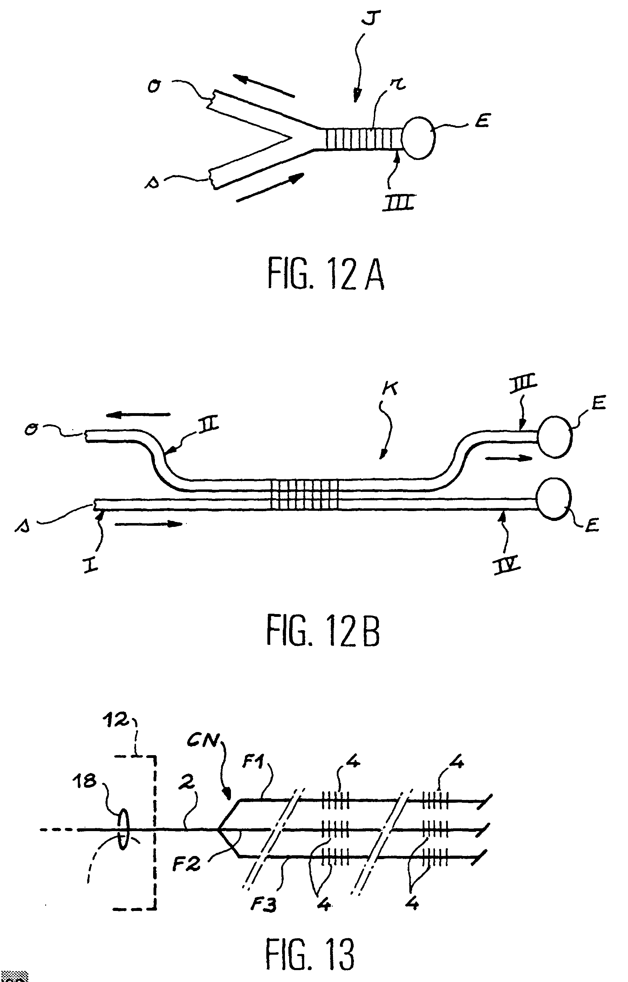

La première solution utilise une jonction Y avec un réseau de Bragg r (avantageusement à 100% de réflexion) photo-inscrit sur la branche d'entrée (voir la figure 12A où la jonction a la référence J). Cette solution est avantageuse en ce sens que les propriétés de guidage des jonctions Y sont très peu sensibles à la polarisation et à la longueur d'onde de la lumière. Ainsi, un seul masque peut être réalisé pour obtenir le composant ce qui rend la fabrication très flexible car seules les longueurs d'onde des réseaux de Bragg sont ajustées pour réaliser le démultiplexeur. En revanche, cette jonction Y impose une perte optique de 6 dB lors de l'opération de filtrage (c'est-à-dire que le signal va de la sortie s vers le guide o).

Une deuxième solution permettant de supprimer cet inconvénient consiste à photo-inscrire simultanément chaque réseau de Bragg r (avantageusement à 100% de réflexion) sur les deux bras d'un coupleur K afin de former un coupleur assisté par réseau (voir figure 12B). Un tel coupleur est avantageusement choisi de façon à avoir une faible constante de couplage C de sorte qu'un seul battement est observé sur la longueur de couplage $L_c$ (c'est-à-dire $C.L_c=\pi/2$) afin de minimiser sa dépendance en longueur d'onde et en polarisation. Le principe d'un coupleur assisté par réseau est alors le suivant. La longueur de couplage, l'intervalle de couplage et les caractéristiques des guides du coupleur sont choisis afin d'obtenir un transfert total de l'énergie du port I au port couplé III, soit 100%. En présence d'un réseau (opérant en réflexion) photo-inscrit sur les deux bras, les longueurs d'onde réfléchies par le réseau de Bragg parcourent le coupleur en sens inverse et sont réfléchies au port II (comme si elles venaient du port IV symétrique du port II). Il y a alors « extraction » des signaux dont les longueurs d'onde correspondent à la longueur d'onde caractéristique du réseau de Bragg photo-inscrit. Ce comportement est décrit (à titre d'exemple) dans le document (30).

Dans les deux cas (jonction Y ou coupleur 100% assisté par réseau de Bragg), les extrémités des guides III (figure 12A) et III et IV (figure 12B) sont percées en biais (ce que l'on a symbolisé par des ovales E sur les figures 12A et 12B) afin de supprimer les réflexions de Fresnel qui sont sources de diaphonie.

La figure 13 illustre schématiquement un autre mode de réalisation particulier de l'invention dans lequel les capteurs 4 de la figure 2B ne sont pas placés en série sur la fibre 2 : dans le cas de la figure 13, cette fibre 2 (dont la longueur peut être très petite) relie le coupleur 18 à une pluralité de fibres optiques F1, F2, F3 (trois fibres dans l'exemple représenté) par l'intermédiaire d'un coupleur optique CN de type 1 vers N (N=3 dans l'exemple représenté) et un ou plusieurs capteurs 4 (réseaux de Bragg) sont formés (de préférence photo-inscrits) sur chacune des fibres F1, F2 et F3, tous ces composants 2, 4, CN, F1, F2 et F3 étant bien entendu intégrés dans la structure en matériau composite 6 mentionnée dans la description de la figure 1.

Dans les systèmes conformes à l'invention précédemment décrits, on utilise au moins un capteur formé par un transducteur à réseau de Bragg, de préférence photo-inscrit. En conséquence :

1) intrinsèquement le transducteur n'est soumis à aucune dérive puisqu'on ne mesure pas une grandeur absolue mais le quotient entre la longueur d'onde issue d'un transducteur et la longueur d'onde de référence de ce même transducteur

2) lorsque, sur une même fibre, plusieurs zones de mesure correspondent à des transducteurs soumis chacun à un environnement différent, il est possible d'adjoindre à chaque zone de mesure, un second transducteur noyé dans le matériau de la structure mais isolé des contraintes mécaniques (par exemple à l'aide d'un manchon), qui corrigera l'erreur induite par l'écart de température de cette zone par rapport à la référence.

Le point 1) établit l'immunité aux dérives thermiques affectant l'ensemble de la structure à surveiller, et le point 2) l'immunité aux dérives thermiques résultant des inhomogénéités thermiques au sein de cette structure, ce qui arrive fréquemment aux structures de grandes dimensions. De même, le choix d'une émission en modulation de fréquence des informations vers l'extérieur de la structure garantit une transmission des informations indépendantes des pertes d'énergie contrairement à un système qui utilise la modulation d'amplitude. L'immunité aux dérives thermiques doit être assurée pour tout système destiné à fonctionner sur de longues périodes temporelles (quelques minutes à quelques années).

De plus, dans ces systèmes précédemment décrits, l'information transmise est un quotient entre l'intensité transmise par un filtre de mesure et l'intensité de référence, ce quotient étant proportionnel à l'écart de longueur d'onde mesuré indépendamment de la valeur de l'intensité lumineuse. L'invention permet donc une mesure normée.

Il convient également de noter qu'un transducteur à réseau de Bragg photo-inscrit est sensible uniquement aux microdéformations locales, sur une zone dont les dimensions sont du même ordre de grandeur que le réseau de Bragg. Les mesures faites avec un tel transducteur sont donc de type ponctuel. Il convient en outre de noter qu'un transducteur à réseau de Bragg photo-inscrit est, de par son principe, apte à un multiplexage en longueur d'onde : il suffit de graver plusieurs réseaux de Bragg accordés sur des fréquences différentes, pourvu que l'ensemble de toutes les fréquences utilisées sur une même fibre transductrice remplissent les conditions suivantes :

- être toutes incluses dans la source d'excitation spectralement large (par exemple diode super luminescente)
- être suffisamment distinctes pour une bonne séparation des voies de mesure dans un dispositif de démultiplexage du genre de celui qui a été décrit plus haut.

Le système objet de l'invention est donc particulièrement adapté à des mesures à des fréquences élevées (kHz et plus) et permet également d'effectuer des mesures à des fréquences basses, voire très basses, en garantissant l'immunité aux dérives thermiques décrites précédemment. Les applications industrielles correspondantes sont les surveillances dans le temps de structures mécaniques, notamment de grandes dimensions, et particulièrement la surveillance des structures d'aéronefs. La surveillance des ouvrages de génie civil convient également.

Les documents cités dans la présente description sont les suivants :

(1) W.W. Morey, UNITED TECHNOLOGY CORPORATION (USA), Distributed multiplexed optical fiber Bragg grating sensor arrangement - US 4,996,419 A

(2) D.R. Lyons and S.M. Reich, GRUMMAN AEROSPACE CORPORATION (USA), Optical electronic multiplexing reflection sensor system - US 5,191,458 A

(3) P. Ferdinand et al., Mine Operating Accurate STABILity Control with Optical fiber sensing and Bragg grating technology : the BRITE-EURAM STABILOS Project OFS'94, 11-13 oct 1994, Glasgow

(4) H.V. Allen, J.W. Knutti and J.D. Meindl, Integrated power controllers and RF Data transmitters for totally implantable telemetry, Biotelemetry Patient Monitg., 6, 1979, p.147-159

(5) P. Wouters, M. De Cooman, D. Lapadatu and R. Puers, A low power multi-sensor for injectable microprocessor based animal monitoring system, Sensors and Act. A, vol.41-42, 1994, p.198-206

(6) J.D. Meindl, Implantable telemetry in biomedical research, IEEE Trans. Bio. Med., 31, 1984, p.817-823

(7) K. Stickelbrocks, TEXAS INSTRUMENTS DEUTSCHLAND, Transponder - EP 0 440 153 A

(8) J.H. Schuermann, TEXAS INSTRUMENTS DEUTSCHLAND, High Speed Read/Write AVI System - US 5,287,112 A et US 5,374,930 A

(9) B. Viereck, TEXAS INSTRUMENTS DEUTSCHLAND, Circuit arrangement for antenna coupling, EP 0 523 271 A

(10) G.A.M. Murdoch, MAGELLAN TECHNOLOGY, Transponder, WO 89/05067

(11) B.G. Viereck, TEXAS INSTRUMENTS DEUTSCHLAND, Identification device with inductive antenna coupling, EP 0 394 714 A

(12) A. Kirchner, Product Concept & Application Laboratory, Hamburg (Germany), The PIT and amplitude demodulation, Note d'Application Philips AN94007 Notice PIT PHILIPS PCF7930CP/25

(13) P.R. Troyk and G.A. DeMichele, TROVAN Ltd, Method and apparatus for producing a subcarrier signal for transmission by an inductively coupled transponder, US 5,198,807 A, Electromagnetic energy transmission and detection system, WO 90/14736

(14) W.B. Spillman and S. Durkee, Non-contact power/interrogation system for smart structures, SPIE, vol.2191, 1994, p.362-372

(15) W.B. Spillman, S. Durkee and W.W. Kuhns, Remotely interrogated sensor electronics (RISE) for smart structures applications, Second European Conf. on Smart Structures and Materials, Glasgow, 1994, p.282-285

(16) S.M. Melle, L. Liu and R. M. Measures, A passive wavelength demodulation system for guided-wave Bragg grating sensors, IEEE Phot. Tech. Lett., vol.4, n°5, 1992, pp.516-518

(17) M.A. Davis and A.D. Kersey, All-fibre Bragg grating strain-sensor demodulation technique using a wavelength division coupler, Electron. Lett., vol.30, n°1, 1994, pp. 75-77

(18) S. Honkanen, Ion-exchanged glass waveguide devices for optical communications, Glass integrated optics and optical fiber devices, S. Iraj Najafi Ed., SPIE vol CR53, 1994, p.159-179

(19) L. Roβ, Integrated optical components in substrate glasses, Glastech. Ber., vol.62, 1989, p.285-297

(20) S. Valette et al., Si-based integrated Optics Technologies, Solid State Tech., 1989, p.69-74

(21) S. Valette, S. Renard, J.P. Jadot, P. Gidon and C. Erbeia, Silicon-based Integrated Optics Technology for Optical Sensor Application, Sensors and Act. A, 1990, p.1087-1091

(22) B.J. Ainslie, G.D. Maxwell and D.L. Williams, Photosensitive glass integrated optical devices, Glass integrated optics and optical fiber devices, S. Iraj Najafi Ed., SPIE vol CR53, 1994, p.235-249

(23) G.D. Maxwell, R. Kashyap and B.J. Ainslie, UV written 1,5 μm reflection filters in single mode planar silica guides, Electron. Lett., vol.28, n°22, 1992, p.2107-2108

(24) K.O. Hill, F. Bilodeau, B. Malo, J. Albert, D.C. Johnson, Y. Hibino, M. Abe and M. Kawachi, Photosensitivity of optical fibre and silica on silica/silicon waveguides, Opt. Lett. Vol.18, n°12, 1993, p.953-955

(25) M.C. Farries, K. Sugden, D.C.J. Reid, I. Bennion, A. Monoly and M.J. Goodwin, Very broad reflection bandwidth (44 nm) chirped fiber grating and narrow bandpass filters produced by the use of a phase mask, Electron. Lett., vol.30, n°11, 1994, p.891-892

(26) R. Kashyap, P.F. McKee, R.J. Campbell and D.L. Williams, Novel method of producing all fiber photo-induced chirped gratings, Electron. Lett., vol.30, n°12, p.996-997

(27) A. Billat, A. Leclerc, J.C. Edmond et G. Villermain-Lecolier, Etude d'un capteur électromagnétique plat de proximité, Revue Phys. Appl., vol.21, 1986, pp.443-450

(28) P. Bitsindou, P. Guillaume, G. Delaunay and G. Villermain-Lecolier, Detection of holes, rivets or screws fixed on a metal sheet using a flat magnetic sensor, Sensors and Act. A, vol.24, 1990, pp.181-186

(29) K. Yamagushi, S. Ohnuma, T. Imagawa, J. Toriu, H. Matsuki and K. Murakami, Characteristics of a thin film microtransformer with circular spiral coils, IEEE Trans. Magn., vol.29, n°5, 1993, p.2232-2237

(30) Ingolf Baumann et al., Compact all-fiber add-drop multiplexer using fiber gratings, IEEE Phot. Tech. Lett., vol. 8, n°10, 1996, pp.1331-1333.

**Revendications**

1. Système d'alimentation et de transmission pour capteur à fibre optique, intégré dans une structure (6) en matériau amagnétique, la fibre optique (2) étant reliée à au moins un capteur (4) apte à modifier une lumière se propageant dans cette fibre optique (2), sous l'effet d'une modification d'un paramètre de la structure (6), chaque capteur (4) étant un transducteur à réseau de Bragg,
ce système étant **caractérisé en ce qu'**un circuit optique (12) et un circuit étectronique sont intégrés dans ladite structure (6),
le circuit optique (12) comprenant une source de lumière (16), qui est prévue pour envoyer ladite lumière dans la fibre optique (2), et des moyens opto-électriques (20) prévus pour détecter la lumière modifiée par le capteur (4) et fournir des signaux électriques permettant de déterminer la modification du paramètre de la structure (6), et
le circuit électronique (14) comprenant des moyens (22) d'émission radio-fréquence de ces signaux électriques et des moyens d'alimentation (24) qui reçoivent de l'énergie électromagnétique par induction et sont prévus pour l'alimentation électrique de la source de lumière (16) et des moyens (22) d'émission radio-fréquence.

2. Système selon la revendication 1, dans lequel chaque transducteur à réseau de Bragg est photo-inscrit sur la fibre optique (2).

3. Système selon l'une quelconque des revendications 1 et 2, dans lequel chaque capteur (4) est apte à fournir, à partir de ladite lumière, une raie spectrale susceptible de fluctuer dans un domaine spectral déterminé en vue de mesurer la longueur d'onde de cette raie.

4. Système selon la revendication 3, dans lequel la fibre optique (2) est munie d'une pluralité de capteurs (4) placés en série sur cette fibre optique (2), les moyens opto-électriques (20) comprenant un dispositif de démultiplexage (40) ayant une entrée destinée à recevoir les raies spectrales correspondant aux capteurs (4) et des sorties destinées à fournir respectivement les raies spectrales démultiplexées de façon à pouvoir mesurer les longueurs d'onde respectives de ces raies.

5. Système selon la revendication 4, dans lequel le dispositif de démultiplexage (40) comprend :

   - un séparateur en énergie (a, b, c), ayant une entrée, qui est destinée à recevoir le spectre optique formé par l'ensemble des raies spectrales, et une pluralité de sorties qui sont aptes à fournir respectivement des fractions de l'énergie lumineuse du spectre optique, et
   - une pluralité de réflecteurs de lumière sélectifs en longueur d'onde (r) qui sont respectivement reliés aux sorties, chaque réflecteur de lumière sélectif en longueur d'onde ayant une bande passante en longueur d'onde qui contient le domaine spectral associé à l'une des raies et réfléchissant donc seulement cette raie, chaque réflecteur sélectif étant relié à un guide d'onde optique destiné à propager la raie réfléchie par ce réflecteur.

6. Système selon la revendication 5, dans lequel le séparateur en énergie (a,b,c) est un ensemble de jonctions séparatrices montées en cascade.

7. Système selon l'une quelconque des revendications 5 et 6, dans lequel les réflecteurs sélectifs comprennent des réseaux de Bragg.

8. Système selon l'une quelconque des revendications 3 à 7, dans lequel les moyens opto-électriques (20) comprennent :

   - un dispositif de mesure, par filtrage, de la longueur d'onde de chaque raie spectrale, ce dispositif de mesure comprenant, pour chaque raie, une voie de mesure (VM) munie d'un filtre et une voie de référence (VR), et
   - des moyens de photo-détection (P1-P2, 42), pour chaque raie spectrale, des intensités lumineuses respectivement transmises par les voies de mesure (VM) et de référence (VR) correspondantes, de manière à pouvoir déterminer la longueur d'onde de cette raie en calculant le rapport des intensités ainsi détectées.

9. Système selon la revendication 8, dans lequel chaque filtre associé à une voie de mesure (VM) est choisi parmi les réseaux de Bragg à période variable (RB) et les filtres à multicouches diélectriques (FU).

10. Système selon les revendications 4 et 8, dans lequel le dispositif de démultiplexage et le dispositif de mesure par filtrage sont intégrés sur un même substrat (10).

11. Système selon la revendication 10, dans lequel le substrat (10) est en verre ou en silicium.

12. Système selon l'une quelconque des revendications 1 à 11, dans lequel les moyens d'émission radio-fréquence (22) comprennent des moyens de multiplexage temporel des signaux et des moyens de modulation de fréquence des signaux multiplexés.

13. Système selon l'une quelconque des revendications 1 à 11, dans lequel les moyens d'émission radio-fréquence (22) comprennent des moyens de modulation d'amplitude, à porteuses multiples, des signaux.

14. Système selon l'une quelconque des revendications 1 à 13, comprenant en outre un substrat (10) en verre, en silicium ou en polyimide auquel sont fixés le circuit optique (12) et le circuit électronique (14), l'ensemble formé par ce circuit optique, ce circuit électronique et ce substrat (10) étant noyé dans un matériau céramique ou une résine époxy (36).

15. Système selon l'une quelconque des revendications 1 à 14, dans lequel ledit paramètre est une température ou une contrainte.

16. Système selon l'une quelconque des revendications 1 à 15, dans lequel le matériau amagnétique est un matériau composite.

17. Système selon la revendication 1, dans lequel la fibre optique (2) est reliée à une pluralité de transducteurs (4) formés sur une pluralité de fibres optiques (F1, F2, F3) reliées à ladite fibre optique (2).

18. Module d'alimentation et de réception conçu pour le système selon l'une quelconque des revendications 1 à 17, ce module (28) étant destiné à être mis en contact avec la paroi externe de la structure (6) et comprenant :

   - des moyens (30) d'émission d'énergie électromagnétique destinée à être fournie, par induction, aux moyens d'alimentation (24) faisant partie du circuit électronique (14) du système,
   - des moyens (52) d'alimentation à haute tension et haute fréquence de ces moyens (30) d'émission d'énergie électromagnétique, et
   - des moyens (54) de réception des signaux émis par les moyens d'émission radio-fréquence (22) faisant partie du circuit électronique du système.

19. Module selon la revendication 18, ce module (28) étant rendu rigidement solidaire de la structure (6) en vue d'alimenter le système et recevoir les signaux en permanence lors de l'utilisation de la structure.

20. Module selon la revendication 18, ce module (28) étant amovible en vue d'alimenter le système et recevoir les signaux seulement lors d'une inspection de la structure (6).

## Patentansprüche

1. Versorgungs- und Übertragungssystem für einen in eine amagnetische Struktur integrierten optischen Fasersensor, wobei die optische Faser (2) verbunden ist mit wenigstens einem Sensor (4), fähig unter der Wirkung einer Änderung eines Parameters der Struktur (6) ein sich in dieser optischen Faser (2) ausbreitendes Licht zu modifizieren, wobei jeder Sensor (4) ein Bragg-Gitter-Transducer ist und dieses System dabei **dadurch gekennzeichnet ist,**
   **dass** eine optische Schaltung (12) und eine elektronische Schaltung in die genannte Struktur (6) integriert sind,
   **dass** die optische Schaltung (12) eine Lichtquelle (16), die das genannte Licht in die Faser (2) einspeist, sowie optoelektronische Einrichtungen (20) umfasst, die dazu dienen, das durch den Sensor (4) modifizierte Licht zu detektieren und elektrische Signale zu liefern, welche ermöglichen, die Änderung des Parameters der Struktur (6) zu bestimmen, und
   **dass** die elektronische Schaltung (14) Hochfrequenz-Sendeeinrichtungen (22) dieser elektrischen Signale und Versorgungseinrichtungen (24) umfasst, welche die elektromagnetische Energie mittels Induktion empfangen und zur elektrischen Versorgung der Lichtquelle (16) und der Hochfrequenz-Sendeeinrichtungen (22) vorgesehen sind.

2. System nach Anspruch 1, bei dem jeder Bragg-Gitter-Transducer in der optischen Faser (2) photoinduziert wird.

3. System nach einem der Ansprüche 1 und 2, bei dem jeder Sensor (4) fähig ist, aufgrund des genannten Lichts eine in einem bestimmten Spektralbereich fluktuierende Spektrallinie zu liefern, was eine Messung der Wellenlänge dieser Spektrallinie ermöglicht.

4. System nach Anspruch 3, bei dem die optische Faser (2) eine Vielzahl in dieser optischen Faser (2) in Serie angeordneter Sensoren (4) umfasst, wobei die eine Demultiplexvorrichtung (40) umfassenden optoelektronischen Einrichtungen (20) einen Eingang für den Empfang der den Sensoren (4) entsprechenden Spektrallinien haben, und Ausgänge, die dazu bestimmt sind, jeweils die demultiplexten Spektrallinien zu liefern, um die jeweiligen Wellenlängen dieser Spektrallinien messen zu können.

5. System nach Anspruch 4, bei dem die Demultiplexvorrichtung (40) umfasst

   - einen Energieteiler (a, b, c), mit einem Eingang für den Empfang des durch die Gesamtheit der Spektrallinien gebildeten optischen Spektrums und einer Vielzahl von Ausgängen, fähig jeweils Bruchteile der Lichtenergie des optischen Spektrums zu liefern, und
   - eine Vielzahl wellenlängenselektiver Lichtreflektoren (r), die jeweils mit den Ausgängen verbunden sind, wobei jeder wellenlängenselektive Lichtreflektor ein Wellenlängen-Durchlassband hat, das den Spektralbereich enthält, der einer der Spektrallinien zugeordnet ist und der folglich nur diese Spektrallinie reflektiert, und jeder selektive Reflektor mit einem Lichtwellenleiter verbunden ist, welcher der Ausbreitung der durch diesen Reflektor reflektierten Spektrallinie dient.

**6.** System nach Anspruch 5, bei dem der Energieteiler (a, b, c) durch eine Gruppe kaskadenförmig geschalteter Trennübergänge gebildet wird.

**7.** System nach einem der Ansprüche 5 und 6, bei dem die selektiven Reflektoren Bragg-Gitter umfassen.

**8.** System nach einem der Ansprüche 3 bis 7, bei dem die optoelektronischen Einrichtungen (20) umfassen:

- eine Vorrichtung, welche durch Filtern die Wellenlänge jeder Spektrallinie misst, wobei diese Messvorrichtung für jede Spektrallinie einen mit einem Filter ausgestatteten Messkanal (VM) und einen Bezugskanal (VR) umfasst, und
- Einrichtungen (P1-P2, 42) zur Photodetektion der jeweils durch die Messkanäle (VM) und die Bezugskanäle (VR) übertragenen Leuchtintensitäten jeder Spektrallinie, um die Wellenlänge dieser Spektrallinie bestimmen zu können, indem man das Verhältnis der so detektierten Leuchtintensitäten berechnet.

**9.** System nach Anspruch 8, bei dem jedes einem Messkanal (VM) zugeordnete Filter ausgewählt wird unter den Bragg-Gittern mit variabler Periode (RB) und den dielektrischen Multischicht-Filtern (FU).

**10.** System nach den Ansprüchen 4 und 8, bei dem die Demultiplexvorrichtung und die filternde Messvorrichtung auf einem selben Substrat (10) integriert sind.

**11.** System nach Anspruch 10, bei dem das Substrat (10) aus Glas oder aus Silicium ist.

**12.** System nach einem der Ansprüche 1 bis 11, bei dem die Hochfrequenz-Sendeeinrichtungen (22) Zeitmultiplexeinrichtungen der Signale und Frequenzmodulationseinrichtungen der multiplexten Signale umfassen.

**13.** System nach einem der Ansprüche 1 bis 11, bei dem die Hochfrequenz-Sendeeinrichtungen (22) Mehrträger-Amplitudenmodulationseinrichtungen der Signale umfassen.

**14.** System nach einem der Ansprüche 1 bis 13, das außerdem ein Substrat (10) aus Glas, aus Silicium oder aus Polyimid umfasst, auf dem die optische Schaltung (12) und die elektronische Schaltung (14) befestigt sind und das durch die optische Schaltung, die elektronische Schaltung und dieses Substrat (10) gebildete Ganze eingebettet wird in ein keramisches Material oder ein Expoxydharz (36).

**15.** System nach einem der Ansprüche 1 bis 14, bei dem der genannte Parameter eine Temperatur oder eine Belastung ist.

**16.** System nach einem der Ansprüche 1 bis 15, bei dem das amagnetische Material ein Verbundwerkstoff ist.

**17.** System nach Anspruch 1, bei dem die optische Faser (2) mit einer Vielzahl von Transducern (4) verbunden ist, gebildet in einer Vielzahl von optischen Fasern (F1, F2, F3), die mit der genannten optischen Faser (2) verbunden sind.

**18.** Versorgungs- und Empfangsmodul, konzipiert für das System nach einem der Ansprüche 1 bis 17, wobei dieser Modul (28) der dazu bestimmt ist, mit der Außenwand der Struktur (6) in Kontakt gebracht zu werden, umfasst:

- Emissionseinrichtungen elektromagnetischer Energie (30), die mittels Induktion den Versorgungseinrichtungen (24) geliefert wird, die Teil der elektronischen Schaltung (14) des Systems sind,
- Einrichtungen (52) zur Hochspannungs- und Hochfrequenzversorgung dieser Energieemissionseinrichtungen (30), und
- Empfangseinrichtungen (54) der durch die einen Teil der elektronischen Schaltung des Systems bildenden Hochfrequenz-Sendeeinrichtungen (22) gesendeten Signale.

**19.** Modul nach Anspruch 18, wobei dieser Modul (28) starr bzw. fest mit der Struktur (6) verbunden ist, um das System zu versorgen und während der Benutzung der Struktur permanent die Signale zu empfangen.

**20.** Modul nach Anspruch 18, wobei dieser Modul (28) abnehmbar ist und nur während einer Inspektion der Struktur (6) das System versorgt und die Signale empfängt.

**Claims**

**1.** Supply/transmission system for a fibre-optic sensor, integrated into a structure (6) made of non-magnetic material, the optical fibre (2) being connected to at least one sensor (4) capable of modifying light propagating in this optical fibre (2) through the effect of a change in a parameter of the structure (6), each sensor (4) being a Bragg grating transducer, this system being **characterized in that** an optical circuit (12) and an electronic circuit are integrated into the said structure (6), the optical circuit (12) comprising a light source (16), which is designed to send said light into the optical fibre (2), and opto-electrical means (20) designed to detect the light modified by the sensor (4) and to deliver electrical signals that allow the change in the parameter of the structure (6) to be determined, and the electronic circuit (14) comprising radiofrequency transmission means (22) for transmitting these electrical signals and supply means (24) that receive the electromagnetic energy by induction and are provided for the electrical supply of the light source (16) and of the radiofrequency transmission means (22).

**2.** System according to Claim 1, in which each Bragg grating transducer is photowritten onto the optical fibre (2).

**3.** System according to either of Claims 1 and 2, in which each sensor (4) is capable of delivering, from said light, a spectral line that can fluctuate within a defined spectral range with a view to measuring the wavelength of this line.

**4.** System according to Claim 3, in which the optical fibre (2) is provided with a plurality of sensors (4) placed in a series arrangement on this optical fibre (2), the opto-electrical means (20) comprising a demultiplexing device (40) having an input intended to receive the spectral lines corresponding to the sensors (4) and outputs intended to deliver the respective demultiplexed spectral lines so as to be able to measure the respective wavelengths of these lines.

**5.** System according to Claim 4, in which the demultiplexing device (40) comprises:

- an energy splitter (a, b, c) that has one input, which is intended to receive the optical spectrum formed by all of the spectral lines, and a plurality of outputs, which are capable of respectively delivering fractions of the light energy of the optical spectrum; and
- a plurality of wavelength-selective light reflectors (r) that are connected to the respective outputs, each wavelength-selective light reflector having a wavelength bandwidth that contains the spectral range associated with one of the lines and therefore reflecting only this line, each selective reflector being connected to an optical waveguide intended to propagate the line reflected by this reflector.

**6.** System according to Claim 5, in which the energy splitter (a, b, c) is a set of splitter junctions mounted in cascade.

**7.** System according to either of Claims 5 and 6, in which the selective reflectors comprise Bragg gratings.

**8.** System according to any one of Claims 3 to 7, in which the opto-electrical means (20) comprise:

- a measurement device for measuring, by filtering, the wavelength of each spectral line, this measurement device comprising, for each line, a measurement channel (VM) provided with a filter and a reference channel (VR); and
- photodetection means (P1-P2, 42) for detecting, for each spectral line, light intensities respectively transmitted by the corresponding measurement channel (VM) and reference channel (VR) so as to be able to determine the wavelength of this line by calculating the ratio of the intensities thus detected.

**9.** System according to Claim 8, in which each filter associated with a measurement channel (VM) is chosen from among the variable-period Bragg gratings (RB) and the dielectric multilayer filters (FU).

**10.** System according to Claims 4 and 8, in which the demultiplexing device and the filtering measurement device are integrated onto one and the same substrate (10).

**11.** System according to Claim 10, in which the substrate (10) is made of glass or silicon.

12. System according to any one of Claims 1 to 11, in which the radiofrequency transmission means (22) comprise means for the time-multiplexing of the signals and means for the frequency modulation of the multiplexed signals.

13. System according to any one of Claims 1 to 11, in which the radiofrequency transmission means (22) comprise means for the amplitude modulation, with multiple carriers, of the signals.

14. System according to any one of Claims 1 to 13, which furthermore includes a glass, silicon or polyimide substrate (10) to which the optical circuit (12) and the electronic circuit (14) are fastened, the assembly formed by this optical circuit, this electronic circuit and this substrate (10) being embedded in a ceramic or an epoxy resin (36).

15. System according to any one of Claims 1 to 14, in which the said parameter is a temperature or a strain.

16. System according to any one of Claims 1 to 15, in which the non-magnetic material is a composite.

17. System according to Claim 1, in which the optical fibre (2) is connected to a plurality of transducers (4) that are formed on a plurality of optical fibres (F1, F2, F3) connected to the said optical fibre (2).

18. Supply/receive module designed for the system according to any one of Claims 1 to 17, this module (28) being intended to be put into contact with the external wall of the structure (6) and comprising:

    - means (30) for transmitting electromagnetic energy intended to be delivered, by induction, to the supply means (24) forming part of the electronic circuit (14) of the system;
    - high-voltage high-frequency supply means (52) for supplying these transmission means (30) with electromagnetic energy; and
    - means (54) for receiving the signals transmitted by the radiofrequency transmission means (22) forming part of the electronic circuit of the system.

19. Module according to Claim 18, this module (28) being rigidly bonded to the structure (6) for the purpose of supplying the system and for receiving the signals permanently during use of the structure.

20. Module according to Claim 18, this module (28) being removable for the purpose of supplying the system and receiving the signals only during an inspection of the structure (6).

FIG. 1

FIG. 3

FIG. 4

FIG. 2A

FIG. 2B

FIG. 5A

FIG. 5B

FIG. 6A

FIG. 6B

EP 0 887 619 B1

FIG.7

FIG. 8

EP 0 887 619 B1

FIG. 9A

FIG. 9B

FIG. 10 A

FIG. 10 B

FIG. 11A

FIG. 11B

FIG. 12 A

FIG. 12 B

FIG. 13